# EUROPEAN PATENT APPLICATION

(11) **EP 4 443 281 A1**
(43) Date of publication of application: **09.10.2024**
(21) Application number: 23745820.3
(22) Date of filing: 05.01.2023
(51) Int. Cl.: G06F 3/04817

(54) **APPLICATION COMPONENT MANAGEMENT METHOD AND RELATED DEVICE**

(30) Priority: 28.01.2022 CN 202210109589
(71) Applicant: Huawei Technologies Co., Ltd., Shenzhen, Guangdong 518129 (CN)
(72) Inventor: WANG, Zhiqiang, Shenzhen, Guangdong 518129 (CN); CHEN, Xiaoxiao, Shenzhen, Guangdong 518129 (CN); GU, Bing, Shenzhen, Guangdong 518129 (CN); DING, Yaling, Shenzhen, Guangdong 518129 (CN); ZHOU, Songle, Shenzhen, Guangdong 518129 (CN)
(74) Representative: MERH-IP Matias Erny Reichl Hoffmann Patentanwälte PartG mbB
(86) International application number: PCT/CN2023/070583
(87) International publication number: WO 2023/142935

(57) **Abstract**

This application discloses an application widget management method and a related device. An electronic device (that is, a local device) may obtain application widget information provided by one or more remote devices, and may display and use, based on the application widget information, application widgets provided by the one or more remote devices, so that a problem that cross-device application widgets cannot be viewed on the local device can be resolved, and user experience can be improved.

## Description

This application claims priority to Chinese Patent Application No. 202210109589.3, filed with the China National Intellectual Property Administration on January 28, 2022 and entitled "APPLICATION WIDGET MANAGEMENT METHOD AND RELATED DEVICE", which is incorporated herein by reference in its entirety.

### TECHNICAL FIELD

This application relates to the field of terminal technologies, and in particular, to an application widget management method and a related device.

### BACKGROUND

With popularization of intelligent electronic devices and development of internet technologies, electronic devices such as smartphones, notebook computers, and tablet computers have become indispensable products in people's daily life. To meet an increasing use requirement of a user, types and quantities of applications (Application, APP) installed on these electronic devices are increasing. Generally, entrances of these applications are displayed on a desktop of an electronic device in a form of a desktop icon. In addition to desktop icons, currently, some electronic device manufacturers further provide a desktop application widget function. These desktop application widgets not only can be used as entrances of applications, but also have characteristics such as clearer vision, freer layout, more flexible dimensions, richer content, and personalized customization compared with conventional applications. Application content can be presented in a lightweight, fast, and efficient manner, and the user can perform a shortcut operation to implement a service in one step.

However, currently, an application scenario of the application widgets is limited, and user experience is poor.

### SUMMARY

Embodiments of this application provide an application widget management method and a related device, so that a problem that cross-device application widgets cannot be viewed on a local device can be resolved, and user experience can be improved.

According to a first aspect, an embodiment of this application provides an application widget display method, applied to a first electronic device, where the method includes: The first electronic device receives application widget information from a second electronic device, where the application widget information includes information about a first application widget, and the first application widget is an application widget of the second electronic device; and the first electronic device displays the first application widget based on the information about the first application widget. The information about the first application widget may be used to display the first application widget, and may include a widget identifier of the first application widget (for example, a package name and a module name of the application widget) and description information of the first application widget (for example, a preview image, a title, and a dimension of the application widget).

An embodiment of this application provides an application widget display method. An electronic device (that is, a local device) may obtain application widget information provided by one or more remote devices, and may display, based on the application widget information, the application widgets provided by the one or more remote devices. Therefore, a problem that cross-device application widgets cannot be viewed on the local device can be resolved, and user experience can be improved.

In a possible implementation, the information about the first application widget includes an installation package of the first application widget, and that the first electronic device displays the first application widget based on the information about the first application widget specifically includes: The first electronic device displays the first application widget based on the installation package of the first application widget, where first content is displayed on the first application widget, the first content is generated by the first electronic device based on first data, and the first data is obtained by the first electronic device from the installation package of the first application widget.

In this way, the electronic device may statically display the first application widget, that is, the electronic device may display static information (namely, the first content) of the first application widget.

In a possible implementation, the information about the first application widget includes an installation package of the first application widget and second data, and that the first electronic device displays the first application widget based on the information about the first application widget specifically includes: The first electronic device installs and displays the first application widget based on the installation package of the first application widget and the second data, where second content is displayed on the first application widget, the second content is generated by the first electronic device based on the second data, and the second data is generated when the second electronic device runs the first application widget.

In this way, the electronic device may dynamically display the first application widget, that is, the electronic device may display dynamic information (that is, the second content) of the first application widget.

In a possible implementation, after that the first electronic device displays the first application widget based on the information about the first application widget, the method further includes: The first electronic device detects an operation of adding the first application widget to a desktop by a user, and the first electronic device displays the first application widget on the desktop.

In this way, the electronic device may add the first application widget to the desktop for display, and the user may view the first application widget on the desktop.

In a possible implementation, before that the first electronic device displays the first application widget based on the information about the first application widget, the method further includes: The first electronic device detects an operation of opening an application widget management interface by the user, and the first electronic device displays, in response to the operation, the application widget management interface, where the application widget management interface includes an identifier option, and the identifier option includes an identifier option of the second electronic device; and the first electronic device detects an operation of the user on the identifier option of the second electronic device, where that the first electronic device displays the first application widget based on the information about the first application widget specifically includes: The first electronic device displays, in response to the operation, the first application widget on the application widget management interface based on the information about the first application widget. The application widget of the second electronic device is displayed on the application widget management interface, and the application widget of the second electronic device includes the first application widget.

In this way, after the user taps the identifier option of the second electronic device, the electronic device may display the application widget of the second electronic device for the user to view.

In a possible implementation, before that the first electronic device displays the first application widget based on the information about the first application widget, the method further includes: The first electronic device detects an operation of opening an application widget management interface by the user, and the first electronic device displays, in response to the operation, the application widget management interface, where that the first electronic device displays the first application widget based on the information about the first application widget specifically includes: The first electronic device displays the first application widget on the application widget management interface based on the information about the first application widget, where the application widget management interface further displays a second application widget, and the second application widget is an application widget of the first electronic device.

In this way, the electronic device may display both an application widget of the local device and an application widget of another electronic device on a same interface.

In a possible implementation, before that the first electronic device displays the first application widget based on the information about the first application widget, the method further includes: The first electronic device detects an operation of searching for a keyword on a search interface by the user, and the first electronic device obtains, in response to the operation, application widget information related to the keyword, where the application widget information related to the keyword includes the information about the first application widget, where that the first electronic device displays the first application widget based on the information about the first application widget specifically includes: The first electronic device displays the first application widget on the search interface based on the information about the first application widget.

In this way, after detecting the operation of searching for the keyword on the search interface by the user, the electronic device may display an application widget related to the keyword.

In a possible implementation, before the first electronic device receives application widget information from a second electronic device, the method further includes: The first electronic device detects that a preset condition is triggered, where the preset condition includes any one of the following: the operation of opening the application widget management interface by the user, the operation of searching for the keyword on the search interface by the user, powering on, restarting, unlocking a screen, or updating a system; and in response to triggering the preset condition, the first electronic device sends a first request to the second electronic device, where the first request indicates the second electronic device to send the application widget information to the first electronic device.

In this way, the electronic device may obtain the application widget information from the another electronic device after the preset condition is triggered, so that the user can view the application widget of the another electronic device.

In a possible implementation, the first electronic device displays an identifier of the second electronic device on the first application widget.

In this way, it is convenient for the user to identify a specific electronic device on which the first application widget is located.

In a possible implementation, before that the first electronic device receives application widget information from a second electronic device, the method further includes: The first electronic device establishes a communication connection with the second electronic device, and determines that the second electronic device is a trusted device.

In this way, the first electronic device may obtain the application widget information of the second electronic device based on the communication connection, and determine that the second electronic device is the trusted device. This can ensure security.

According to a second aspect, an embodiment of this application provides an application widget display method, applied to a second electronic device, where the method includes: The second electronic device receives a first request from a first electronic device, where the first request indicates the second electronic device to send application widget information to the first electronic device, the application widget information includes information about a first application widget, and the first application widget is an application widget of the second electronic device; and the second electronic device sends the application widget information to the first electronic device.

In a possible implementation, the information about the first application widget includes an installation package of the first application widget.

In a possible implementation, the information about the first application widget further includes second data, and before that the second electronic device sends the application widget information to the first electronic device, the method further includes: The second electronic device runs the first application widget, and generates the second data.

In a possible implementation, before that the second electronic device receives a first request from a first electronic device, the method further includes: The second electronic device establishes a communication connection with the first electronic device, and determines that the first electronic device is a trusted device.

According to a third aspect, this application provides a communication system, where the communication system includes a first electronic device and a second electronic device, where the second electronic device is configured to send application widget information to the first electronic device; the first electronic device is configured to receive the application widget information, where the application widget information includes information about a first application widget, and the first application widget is an application widget of the second electronic device; and the first electronic device is further configured to display the first application widget based on the information about the first application widget.

According to a fourth aspect, an embodiment of this application provides an electronic device, where the electronic device includes one or more processors and one or more memories, where one or more memories are coupled to one or more processors, the one or more memories are configured to store computer program code, the computer program code includes computer instructions, and when the one or more processors execute the computer instructions, the electronic device is enabled to perform the method according to any one of the possible implementations of the first aspect or the second aspect.

According to a fifth aspect, an embodiment of this application provides a computer storage medium. The computer storage medium stores a computer program, the computer program includes program instructions, and when the program instructions are run on an electronic device, the electronic device is enabled to perform the method according to any one of the possible implementations of the first aspect and the second aspect.

According to a sixth aspect, an embodiment of this application provides a computer program product. When the computer program product runs on a computer, the computer is enabled to perform the method according to any one of the possible implementations of the first aspect and the second aspect.

### BRIEF DESCRIPTION OF DRAWINGS

FIG. 1 is a schematic diagram of displaying an application widget on a desktop by a local device according to an embodiment of this application;
FIG. 2 is a schematic diagram of a communication system according to an embodiment of this application;
FIG. 3A is a schematic diagram of a software architecture of a local device according to an embodiment of this application;
FIG. 3B is a schematic diagram of a software architecture of another local device according to an embodiment of this application;
FIG. 4A and FIG. 4B are a schematic flowchart of an application widget management method according to an embodiment of this application;
FIG. 5A and FIG. 5B are a schematic diagram of a possible coordination manner between internal modules in a process in which a local device establishes a trusted connection with a remote device according to an embodiment of this application;
FIG. 6 is a schematic diagram of a desktop of a local device according to an embodiment of this application;
FIG. 7 is a schematic diagram of displaying, by a remote device, an application widget on an application widget management interface according to an embodiment of this application;
FIG. 8A and FIG. 8B are a schematic diagram of a possible coordination manner between internal modules in a process in which a local device obtains and stores application widget information of a remote device according to an embodiment of this application;
FIG. 9A is a schematic diagram of displaying, by a local device, an application widget of the local device on an application widget management interface according to an embodiment of this application;
FIG. 9B is a schematic diagram of statically displaying, by a local device, application widget of a remote device on an application widget management interface according to an embodiment of this application;
FIG. 9C is another schematic diagram of statically displaying, by a local device, an application widget of a remote device on an application widget management interface according to an embodiment of this application;
FIG. 10A and FIG. 10B are a schematic diagram of a possible coordination manner between internal modules in a process in which a local device statically displays an application widget of a remote device on an application widget management interface according to an embodiment of this application;
FIG. 11A is a schematic diagram of displaying an application widget on a desktop by a remote device according to an embodiment of this application;
FIG. 11B is a schematic diagram of dynamically displaying, by a local device, an application widget of a remote device on an application widget management interface according to an embodiment of this application;
FIG. 11C is another schematic diagram of dynamically displaying, by a local device, an application widget of a remote device on an application widget management interface according to an embodiment of this application;
FIG. 12A and FIG. 12B are schematic diagrams of a user interface of adding an application widget of a remote device to a desktop of a local device for display according to an embodiment of this application;
FIG. 13A and FIG. 13B are a schematic diagram of a possible coordination manner between internal modules in a process in which a local device dynamically displays an application widget of a remote device on an application widget management interface according to an embodiment of this application;
FIG. 14A is a schematic diagram of a search interface of a local device according to an embodiment of this application;
FIG. 14B is a schematic diagram of automatically recommending and statically displaying, by a local device, an application widget of a remote device on a search interface according to an embodiment of this application;
FIG. 15A and FIG. 15B are a schematic diagram of a possible coordination manner between internal modules in a process in which a local device statically displays an application widget of a remote device on a search interface according to an embodiment of this application;
FIG. 16 is a schematic diagram of automatically recommending and dynamically displaying, by a local device, an application widget of a remote device on a search interface according to an embodiment of this application;
FIG. 17A and FIG. 17B are a schematic diagram of a possible coordination manner between internal modules in a process in which a local device dynamically displays an application widget of a remote device on a search interface according to an embodiment of this application; and
FIG. 18 is a schematic diagram of a structure of a local device according to an embodiment of this application.

### DESCRIPTION OF EMBODIMENTS

The following clearly and completely describes technical solutions in embodiments of this application with reference to accompanying drawings in embodiments of this application. In the descriptions of embodiments of this application, unless otherwise stated, "/" indicates or, for example, A/B may indicate A or B. "And/or" in this specification merely describes an association relationship between associated objects, and indicates that three relationships may exist. For example, A and/or B may indicate that there are three cases: Only A exists, both A and B exist, and only B exists. In addition, in the descriptions of embodiments of this application, "a plurality of' means two or more.

It should be understood that terms "first", "second", and the like in the specification, the claims, and the accompanying drawings of this application are intended to distinguish between different objects, but are not intended to describe a specific order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this application means that a particular feature, structure, or feature described with reference to an embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in this application may be combined with another embodiment.

A term "user interface (user interface, UI)" in following embodiments of this application is a medium interface for interaction and information exchange between an application or an operating system and a user, and implements conversion between an internal form of information and a form acceptable to the user. The user interface is source code written in a specific computer language such as Java or an extensible markup language (extensible markup language, XML). Interface source code is parsed and rendered on an electronic device, and is finally presented as content that can be identified by the user. A common representation form of the user interface is a graphical user interface (graphic user interface, GUI), which refers to a user interface that is displayed in a graphical manner and that is related to a computer operation. The user interface may be a visual interface element such as a text, an icon, a button, a menu, a tab, a text box, a dialog box, a status bar, a navigation bar, or a widget that is displayed on a display of the electronic device.

For ease of understanding, a concept of "application widget" in embodiments of this application is first described.

The application widget (Application Widget, App Widget) may also be referred to as a card, a service card, a service widget (Service Widget), an application widget, or an application widget, and is a small window or widget provided by a service module A (service end, for example, an application) of the electronic device on an interface of a module B (a host end, for example, a desktop). The application widget is usually configured to display important information of an application (Application) on a desktop of the electronic device, to implement a service feature of the application. A user may use the application widget by using a shortcut gesture, so as to achieve a goal of direct service in one step and reduce hierarchical jumps.

The application widget is an interface presentation form, and is usually independently customized by a third party (for example, a developer of an application), that is, independent of an application corresponding to the application widget. The application widget may be embedded into another application for display as a part of an interface of the application. For example, a user (for example, a desktop application) may be allowed to embed the application widget into an interface of the user (for example, an activity component embedded into an Android operating system) for display. That is, for any application, an application widget corresponding to the application and the application are independent of each other, that is, the application widget corresponding to the application is not an application interface of the application, but the application widget corresponding to the application may perform data interaction with the application, so as to update or add important information or an operation of the application to the application widget, thereby achieving an objective of direct service and reducing experience levels. For example, an application widget set based on the Android operating system may be referred to as an ongoing card (ongoing card), and an application widget set based on a Harmony operating system may be referred to as a service card, for example, form ability (FA).

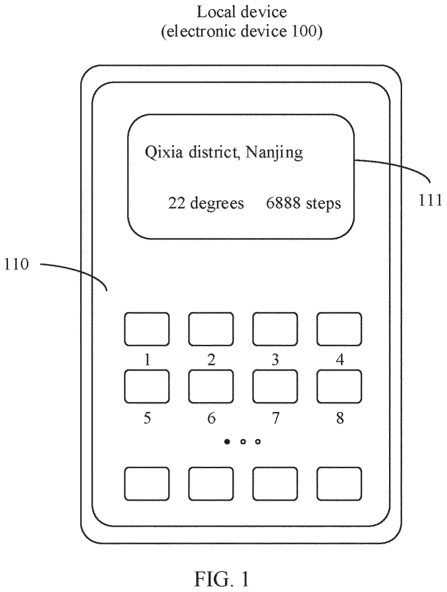

FIG. 1 shows an example of an application widget displayed on a user interface 110 (that is, a desktop) provided by an electronic device 100. Generally, the application widget may display one or more types of information. It can be learned from FIG. 1 that the application widget 111 displays three types of information: location information (for example, Qixia district, Nanjing), temperature information (for example, 22 degrees), and movement step information (for example, 6888 steps). In this way, the application widget is displayed on the desktop, so that the user can directly view the foregoing information displayed in the application widget, and does not need to enter an application that provides the application widget to view the information. This is fast and convenient. In addition, the user may directly tap the application widget to enter the application that provides the application widget, to view more detailed information or perform another task.

The application widget is merely a word used in embodiments of this application, and a meaning represented by the application widget has been recorded in embodiments of this application. A name of the application widget does not constitute any limitation on embodiments of this application.

Currently, application widgets can only be used on a local device. If the user wants to use these application widgets on another remote device, the user needs to manually install applications that provide these application widgets on the remote device, then selects the corresponding application widget through a widget provided by the desktop and adds the application widget to the desktop for display, and finally may need to manually set the application widget based on user's requirements (for example, setting a display location of a weather application widget, and setting a display country of a calendar application widget). Operations are complex and flexibility is poor. The user cannot view or use cross-device application widgets on the local device in the same way as viewing or using the application widgets on the local device, and experience of viewing and using the cross-device application widgets is lacking. As a result, an application scenario of the application widgets is limited, and user experience is poor.

An embodiment of this application provides an application widget management method. An electronic device (that is, a local device) may establish a trusted connection with one or more remote devices. By using the trusted connection, the electronic device may obtain application widget information lists provided by the one or more remote devices, and may display and use, based on the application widget information lists, application widgets provided by the one or more remote devices, so that a problem that cross-device application widgets cannot be viewed and used on the local device can be resolved, and user experience can be improved.

The application widget management method provided in this embodiment of this application mainly includes the following four solutions.

### Solution 1 (the electronic device 100 statically displays the application widget in a scenario in which it is detected that the user views the application widget on the desktop):

The electronic device 100 (that is, the local device) may obtain, by using the trusted connection established with the one or more remote devices, static information of the application widgets provided by the one or more remote devices. In a scenario in which it is detected that the user views, on the desktop, an application widget provided by a specific remote device, the electronic device 100 may statically display, based on the static information, the application widget provided by the remote device.

### Solution 2 (the electronic device 100 dynamically displays the application widget in the scenario in which it is detected that the user views the application widget on the desktop):

The electronic device 100 (that is, the local device) may obtain, by using the trusted connection established with the one or more remote devices, static information and dynamic information (which may also be referred to as personalized data) of the application widgets provided by the one or more remote devices. In a scenario in which it is detected that the user views, on the desktop, an application widget provided by a specific remote device, the electronic device 100 may dynamically display, based on the static information and the dynamic information, the application widget provided by the remote device.

### Solution 3 (the electronic device 100 statically displays the application widget in a specific scenario in which it is detected that information is associated with the one or more application widgets):

The electronic device 100 (that is, the local device) may obtain, by using the trusted connection established with the one or more remote devices, static information of the application widgets provided by the one or more remote devices, and in a specific scenario in which it is detected that the information is associated with the one or more application widgets (for example, in a scenario in which the user inputs a keyword associated with the one or more application widgets for search), the electronic device 100 may automatically recommend and statically display, based on the static information, an application widget associated with the specific scenario (including an application widget of the local device, and/or an application widget of the remote device that establishes the trusted connection with the local device).

### Solution 4 (the electronic device 100 dynamically displays the application widget in the specific scenario in which it is detected that the information is associated with the one or more application widgets):

The electronic device 100 (that is, the local device) may obtain, by using the trusted connection established with the one or more remote devices, static information and dynamic information (which may also be referred to as personalized data) of the application widgets provided by the one or more remote devices. In the specific scenario in which it is detected that the information is associated with the one or more application widgets (for example, in a scenario in which the user inputs the keyword associated with one or more application widgets for search), the electronic device 100 may automatically recommend and dynamically display, based on the static information and the dynamic information, an application widget associated with the specific scenario (including an application widget of the local device and/or an application widget of the remote device that establishes the trusted connection with the local device).

The foregoing four solutions are described in detail in subsequent embodiments, and are not described herein.

The following first describes a communication system provided in an embodiment of this application.

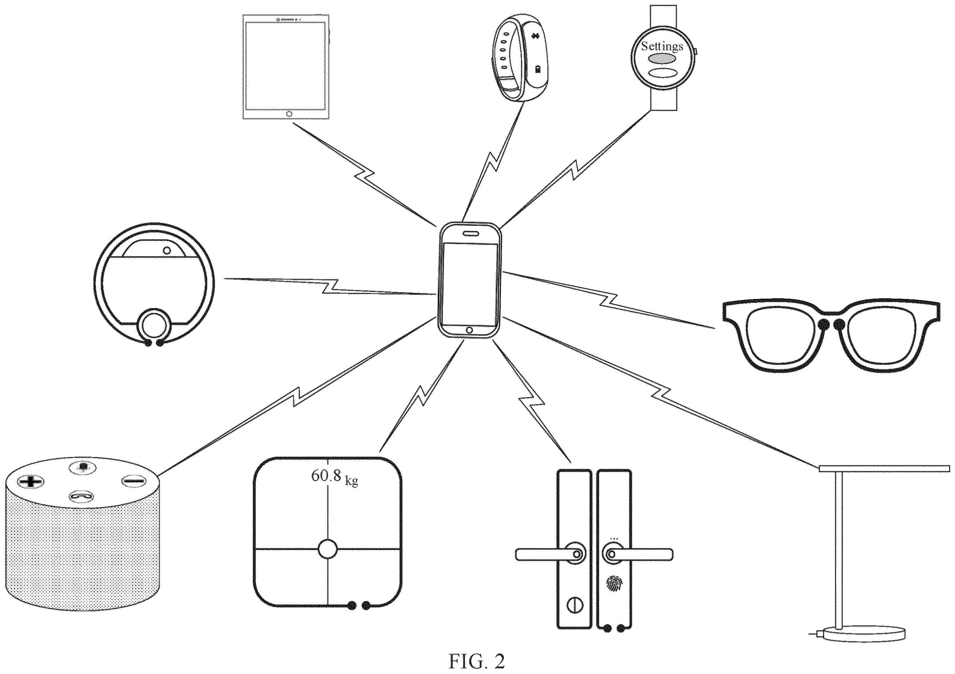

**FIG. 2** **shows an example of a communication system according to an embodiment of this application.**

As shown in FIG. 2, the communication system may include a plurality of electronic devices. The communication system may also be referred to as a distributed system.

The plurality of electronic devices included in the communication system are all intelligent terminal devices, and may be of various types. A specific type of the plurality of electronic devices is not limited in this embodiment of this application. For example, the plurality of electronic devices may include a mobile phone, may further include a tablet computer, a desktop computer, a laptop computer, a handheld computer, a notebook computer, a smart screen, a wearable device, an augmented reality (Augmented Reality, AR) device, a virtual reality (Virtual Reality, VR) device, an artificial intelligence (Artificial Intelligence, AI) device, a head unit, a smart headset, and a game console, and may further include an internet of things (Internet of Things, IOT) device and a smart home device, for example, a smart water heater, a smart lamp, a smart air conditioner, an intelligent sports equipment, or an intelligent medical device, for example, a blood pressure machine.

The plurality of electronic devices in the communication system may be connected by logging in to a same account. For example, a plurality of electronic devices may log in to a same Huawei account, and remotely connect to and communicate with each other by using a server. The account may be a mobile phone number, an email address number, a user-defined user name, a user name allocated by an app server, a user name used for logging in to an app in the electronic device, or the like.

The plurality of electronic devices in the communication system may also log in to different accounts, but are connected in a binding manner. After an electronic device logs in to an account, another electronic device that logs in to a different account or that has not logged in may be bound in a device management application, and then these electronic devices may communicate with each other by using the device management application.

The plurality of electronic devices in the communication system may further establish connections in a manner of scanning a two-dimensional code, touching in near field communication (near field communication, NFC), searching for a Bluetooth device, or the like. This is not limited herein.

Generally speaking, communication connections established between the plurality of electronic devices in the communication system may include but are not limited to: a wired connection, a wireless connection, for example, a Bluetooth (Bluetooth, BT) connection, a wireless local area network (wireless local area network, WLAN) connection, for example, a wireless fidelity point to point (wireless fidelity point to point, Wi-Fi P2P) connection, a near field communication (near field communication, NFC) connection, an infrared (infrared, IR) connection, a remote connection (for example, a connection established by using the server), or the like.

In addition, the plurality of electronic devices in the communication system may be connected and communicate with each other in any of the foregoing manners. This is not limited in this embodiment of this application. In other words, the electronic devices in the communication system may establish a network (that is, networking) according to a specific communication protocol and a networking policy, so that the electronic devices in the communication system can communicate with each other.

The plurality of electronic devices in the communication system may be configured with different software operating systems (Operating System, OS), including but not limited to HarmonyOS^{®}, Android^{®}, iOS^{®}, Windows', Linux^{®}, and the like. HarmonyOS^{®} is Huawei's HarmonyOS. The plurality of electronic devices may all be configured with a same software operating system, for example, all may be configured with HarmonyOS^{®}. When software operating systems of the plurality of electronic devices are HarmonyOS^{®}, the communication system may be regarded as a super terminal.

The following describes two schematic diagrams of software architectures of the electronic device 100 according to an embodiment of this application.

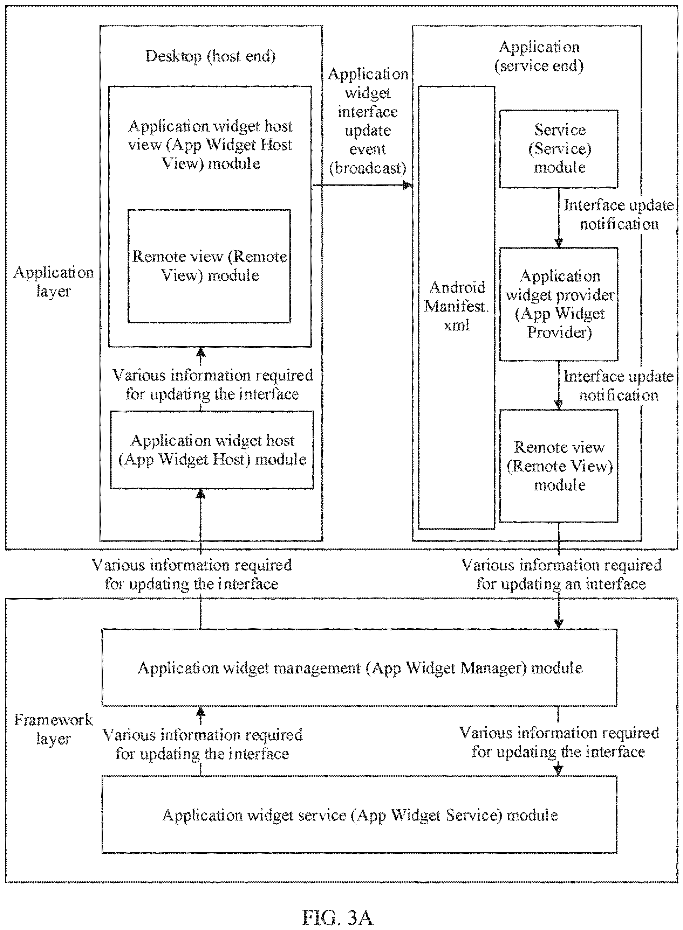

**FIG. 3A** **shows an example of a software architecture (an Android system is used as an example) of an electronic device 100 in an application widget display process according to an embodiment of this application.**

As shown in FIG. 3A, the electronic device 100 may include an application layer and a framework layer.

The application layer may include a series of applications. As shown in FIG. 3A, the application layer may include a desktop (a host end) and another service application (service end) other than the desktop.

The desktop (the host end) may include an application widget host (App Widget Host) module and an application widget host view (App Widget Host View) module.

The application widget host module is an interface provided by the desktop (the host end), and may be configured to support embedding an application widget into the desktop (the host end), and may store interface logic information of the application widget. The application widget host view module includes a remote view (Remote View) module, the application widget host view module may be configured to display the application widget based on a description about the application widget in the remote view module, and the remote view module may be configured to obtain interface logic information of the application widget stored in the application widget host module, so that the application widget host view module can display the application widget.

Another service application (a service end) other than the desktop may include a service (Service) module, an application widget provider (Remote View Provider), a remote view (Remote View) module, an Android Manifest.xml file, or the like.

The service module may be configured to provide a related service required by the application. The application widget provider is a broadcast receiver (Broadcast Receiver), and may be configured to receive a broadcast message for updating an interface of the application widget. The remote view module may be configured to describe view information of the application widget, for example, various information required for updating the application widget interface. The Android Manifest.xml file includes configuration information of the application, where the configuration information may be used to describe modules in the application (for example, the service module, the application widget provider, and the remote view module).

The framework layer may provide an application programming interface (application programming interface, API) and a programming framework for applications at the application layer. The framework layer includes some predefined functions.

As shown in FIG. 3A, the framework layer may include an application widget management (App Widget Manager) module, an application widget service (App Widget Service) module, and the like.

The application widget management module may be configured to provide a channel for interaction between application widget data and events for the service end and the host end, and the application widget service module may be configured to be responsible for management of an application widget (for example, loading the application widget, deleting the application widget, or processing a scheduled event).

Still refer to FIG. 3A. When the application widget interface needs to be updated, the application widget host view module at the host end sends an application widget interface update event to the service end in a form of a broadcast message. The service end creates a service through the service module and sends an interface update notification to the remote view module through the application widget provider. The remote view module generates various information required for updating the interface, and sends the various information required for updating the interface to the application widget management module of the framework layer. The application widget management module invokes some methods provided by the application widget service module to send the various information required for updating the interface to the application widget host module at the host end. The application widget host module updates the application widget based on the various information required for updating the interface, and displays the updated application widget interface at the host end by using the application widget host view module.

It can be learned that the application widget management module in the foregoing framework layer provides a channel for interaction between application widget data and events for the host end and the service end. The application widget is embedded into a container (Container) provided by the host end, so that service end data is displayed independently and an event processing process is completed at the host end. The container is a software program, and may provide a running environment for the application widget, and manage a life cycle of the application widget.

However, currently, the application widget management module implements only management of the application widgets of the local device, and does not implement management of application widgets across devices. In addition, interface logic information of the application widget and a module required for the event processing process are packaged in an application package, and are not separated from the application package.

Based on the foregoing problem, an embodiment of this application provides another software architecture of the electronic device 100.

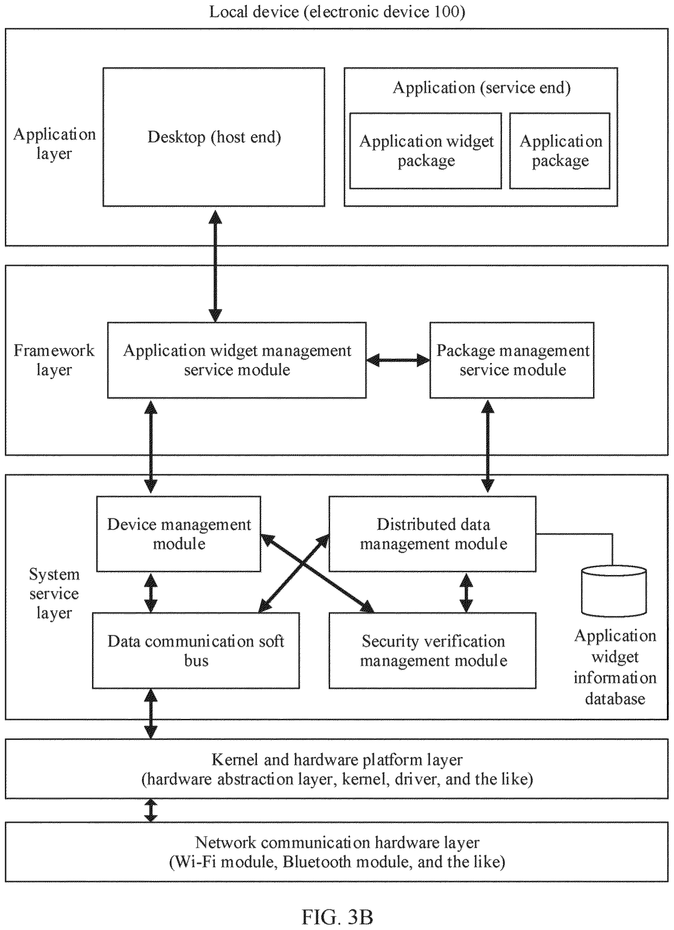

**FIG. 3B** **shows an example of a software architecture of an electronic device 100 related to an application widget management method according to an embodiment of this application.**

As shown in FIG. 3B, the electronic device 100 may include an application layer, a framework layer, a system service layer, a kernel and hardware platform layer, and a network communication hardware layer.

The application layer may include a series of applications. As shown in FIG. 3B, the application layer may include the desktop (the host end) and another service application (the service end) other than the desktop.

The desktop (the host end) can provide a container for injecting an application widget, display the application widget, and support the application widget embedding and running on the desktop.

Different from FIG. 3A, another service application (the service end) other than the desktop may include an application widget package (which may also be referred to as an installation package of an application widget) and an application package (which may also be referred to as an installation package of an application), that is, the application widget package is separated from the application package. The application widget package includes only the service logic and a service related to the application widget. In this way, the application widget package can be decoupled from the application package, lightened, and installed independently. In other words, even if the application corresponding to the application widget is not installed on the electronic device, the application widget may be installed on the electronic device.

Because the application widget is not an independent user interface program, the application widget can run only when the application widget is embedded in a program (that is, a host end). In this embodiment of this application, the host end of the application widget may be the desktop, that is, the application widget may be embedded in the desktop to run.

It may be understood that in this embodiment of this application, that the desktop is merely used as the host end of the application widget is used as an example, and the host end of the application widget may alternatively be another application. This is not limited in this embodiment of this application.

The framework layer may provide an application programming interface (application programming interface, API) and a programming framework for applications at the application layer. The framework layer includes some predefined functions.

As shown in FIG. 3B, the framework layer may include an application widget management service module and a package management service (Package Manager Service, PMS) module.

The application widget management service module may be configured to manage an application widget information list of the local device, available application widget information lists of one or more remote devices that establish a trusted connection with the local device, and the like, and may be invoked by the desktop (the host end).

The package management service module may be configured to manage various application widget packages and application packages, and provide capabilities such as package installation, package registration, and package information management.

The system service layer is a set of core capabilities of the system. The system service layer provides a service for applications at the application layer through the framework layer.

As shown in FIG. 3B, the system service layer may include a device management module, a distributed data management module, an application widget information database, a data communication soft bus, and a security verification management module.

The device management module may be configured to manage device information of the local device, device information of the one or more remote devices that establish the trusted connection with the local device, and the like, and may provide a related API for an upper-layer module.

The distributed data management module may provide a cross-device data synchronization capability and a service API to synchronize service data for an upper-layer service application.

The application widget information database may be used to store application widget packages and personalized data corresponding to the application widget packages of the local device and the one or more remote devices that establish the trusted connection with the local device.

The data communication soft bus may provide capabilities such as device registration, device discovery, device connection, and device communication based on network connection information.

The security verification management module may verify validity of a remote device based on information, for example, a device certificate, an account, and a signature, to ensure that the remote device is a trusted device, provide a related API, and perform trusted verification on application widget package information.

As shown in FIG. 3B, the kernel and hardware platform layer may include a hardware abstraction layer (Hardware Abstraction Layer), a kernel, a driver, and the like.

The hardware abstraction layer runs in user space (User Space), encapsulates drivers in the kernel layer, and provides an invoked interface for an upper layer.

The kernel layer is a layer between hardware and software. The kernel layer may include a display driver, a camera driver, an audio driver, a sensor driver, a Bluetooth driver and the like. In some embodiments, the kernel and hardware platform layer may include a kernel abstract layer (kernel abstract layer, KAL) and a driver subsystem. The KAL includes a plurality of kernels, such as a Linux kernel and a LiteOS kernel of a lightweight internet of things system. The driver subsystem may include a hardware driver foundation (Hardware Driver Foundation, HDF). The hardware driver foundation provides a unified peripheral access capability and driver development and a management framework. A multi-core kernel layer may select a corresponding kernel for processing according to a system requirement.

As shown in FIG. 3B, the network communication hardware layer may include hardware such as a Wi-Fi module and a Bluetooth module, and is configured to implement communication between different devices.

**Still refer to** **FIG. 3B****. A collaboration relationship between the foregoing modules involved in the application widget management method provided in this embodiment of this application is as follows:**
The desktop (the home end) may rely on the application widget management service module to obtain a full application widget information list, where the full application widget information list may include an application widget information list of the local device, and/or application widget information lists of the one or more remote devices that establish the trusted connection with the local device.

The application widget management service module may rely on the package management service module to obtain application widget information, and rely on the device management module to obtain a networked trusted device list (namely, a device information list of the one or more remote devices that establish the trusted connection with the local device).

The package management service module may rely on the distributed data management module to synchronize full application widget information of networked trusted devices to the local device.

The device management module may rely on the data communication soft bus to obtain device information (for example, a device type) of the networked trusted device, and may further rely on the security verification management module to verify validity of the remote device, so as to ensure that the remote device is the trusted device. The trusted device may include but is not limited to a device that is in a same network as the local device and a device that logs in to a same account as the local device.

The distributed data management module may rely on the data communication soft bus to synchronize data across devices, and may also rely on the security verification management module to perform trusted verification on the application widget information.

The data communication soft bus may rely on the kernel and hardware platform layer to realize the network communication between devices through the network communication hardware.

The driver may rely on the network communication hardware layer to implement network communication between devices (for example, wireless communication such as Wi-Fi communication and Bluetooth communication, or wired communication).

It may be understood that FIG. 3A and FIG. 3B are merely examples, and should not impose any limitation on a software architecture of the electronic device 100 in this embodiment of this application. For example, in some other embodiments of this application, the system architecture of the electronic device 100 may alternatively use a hierarchical structure different from that in the examples shown in FIG. 3A and FIG. 3B, or each layer may further include more or fewer modules, or a combination of a plurality of different module manners, or the like. This is not limited in this embodiment of this application. The electronic device 100 may further include all or some of the modules shown in FIG. 3A and all or some of the modules shown in FIG. 3B. This is not limited in this embodiment of this application.

It is easy to understand that a software architecture of another electronic device in this embodiment of this application may be the same as or different from a software architecture of the electronic device 100. This is not limited in this embodiment of this application.

Based on the software architecture shown in FIG. 3B, the following describes in detail a specific procedure of an application widget management method provided in an embodiment of this application.

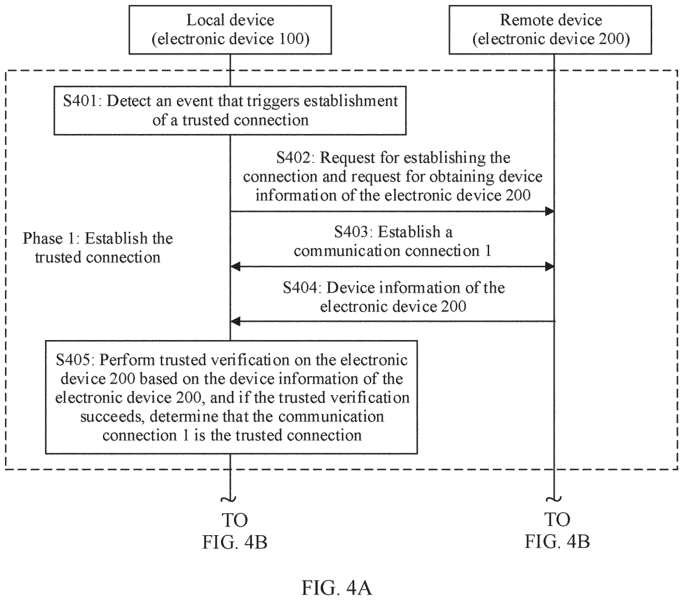

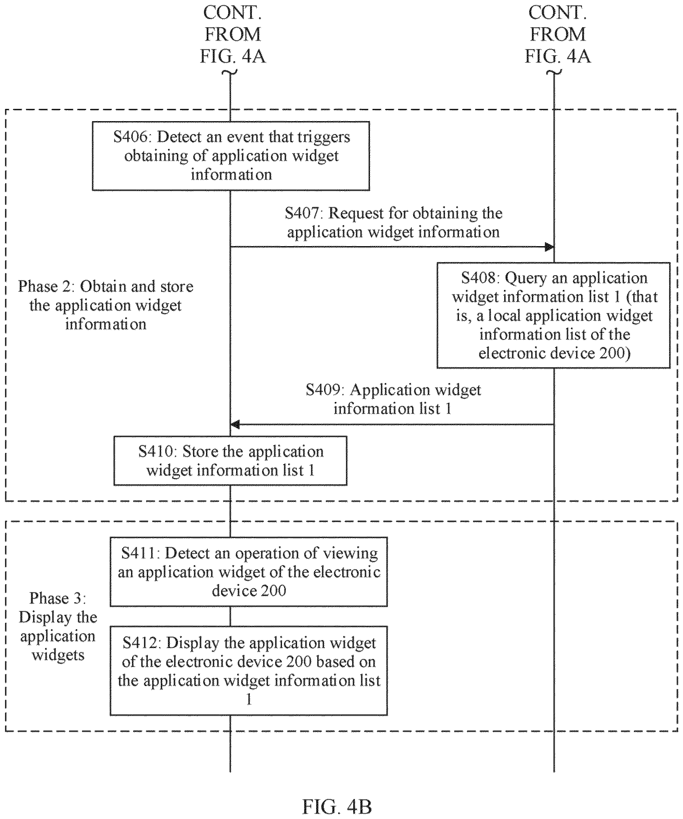

**FIG. 4A** **and** **FIG. 4B** **show an example of a specific procedure of an application widget management method according to an embodiment of this application.**

As shown in FIG. 4A and FIG. 4B, the method may be applied to a communication system that includes the electronic device 100 (that is, the local device) and an electronic device 200 (that is, the remote device). Specific steps of the method are described in detail below.

First, in this embodiment of this application, a trusted connection needs to be established between the electronic device 100 and the electronic device 200, and steps in the following phase 2 and phase 3 can be continued only after the trusted communication connection is established, to implement an objective of displaying application widgets across devices.

For example, a possible implementation of establishing the trusted connection between the electronic device 100 and the electronic device 200 may be an implementation described in the following phase 1 (step S401 to step S405). This is described in detail below.

### Phase 1: Establish the trusted connection

S401 and S402: The electronic device 100 detects an event that triggers establishment of a trusted connection, and in response to the event, the electronic device 100 sends a request for establishing the connection and a request for obtaining device information of the electronic device 200 to the electronic device 200.

The event that triggers establishment of the trusted connection may be an operation (for example, a finger slide-up operation)/instruction (for example, a voice instruction) that a user triggers display of an application widget management interface on a desktop (for example, display and management of user interfaces of application widgets of the local device and the remote device), an operation in which the user triggers, by using an interface of a "Settings" application, the electronic device 100 to establish a communication connection with the electronic device 200, or the like. This is not limited in this embodiment of this application.

In some embodiments, the electronic device 100 may alternatively be triggered, based on a specific characteristic timing (for example, power-on, restart, after screen unlocking, and after system update) of the system, to establish the trusted connection with the electronic device 200.

S403 and S404: The electronic device 200 establishes a communication connection 1 with the electronic device 100, and sends device information of the electronic device 200 to the electronic device 100.

Specifically, after receiving the request for establishing the connection and the request for obtaining the device information of the electronic device 200 that are sent by the electronic device 100, the electronic device 200 may establish the communication connection 1 with the electronic device 100, and send the device information of the electronic device 200 to the electronic device 100.

The device information of the electronic device 200 may include but is not limited to information, for example, a device type, a device name, a device identifier (Identity Document, ID), a sequence number, a media access control address, and a device model of the electronic device 200. This is not limited in this embodiment of this application.

Both the request for establishing the connection and the request for obtaining the device information of the electronic device 200 may carry the device information of the electronic device 100. The device information of the electronic device 100 may include but is not limited to information, for example, a device type, a device name, a device ID, a sequence number, a media access control address, and a device model of the electronic device 100. This is not limited in this embodiment of this application.

S405: The electronic device 100 performs trusted verification on the electronic device 200 based on the device information of the electronic device 200, and if the trusted verification succeeds, determines that the communication connection 1 is the trusted connection.

Specifically, after receiving the device information that is of the electronic device 200 and that is sent by the electronic device 200, the electronic device 100 may perform trusted verification on the electronic device 200 based on the device information of the electronic device 200. Information verified in a trusted verification process includes but is not limited to information, for example, a device certificate and a login account of the electronic device 200.

Further, if the trusted verification succeeds, it is determined that the electronic device 200 is a trusted device, and the communication connection 1 is a trusted connection.

In some embodiments, the electronic device 200 may alternatively perform trusted verification on the electronic device 100 in the foregoing manner.

In this case, the electronic device 100 and the electronic device 200 complete establishment of the trusted communication connection. Further, steps in the following phase 2 and phase 3 may be performed based on the trusted connection.

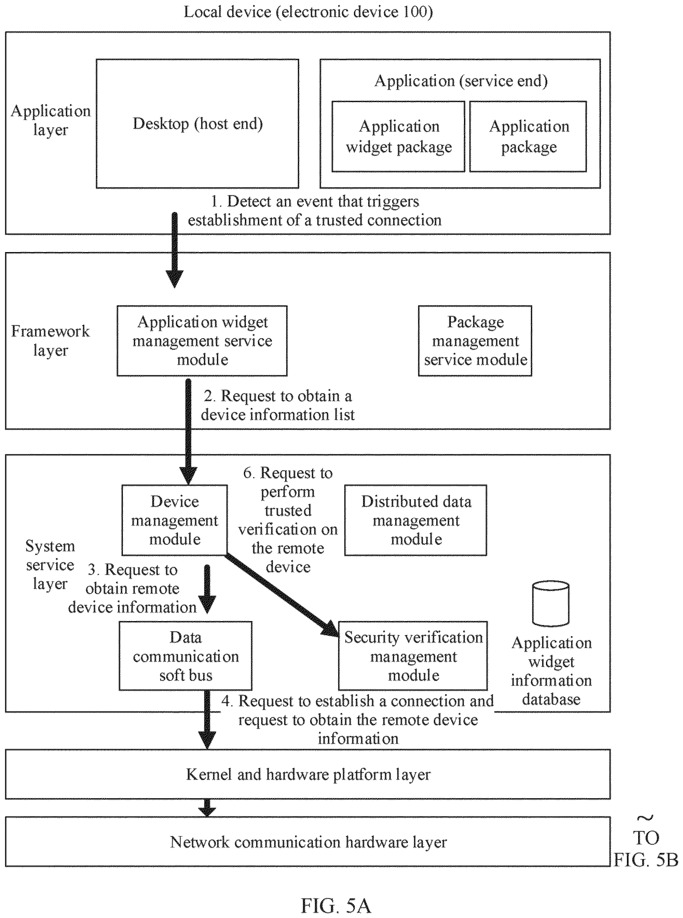

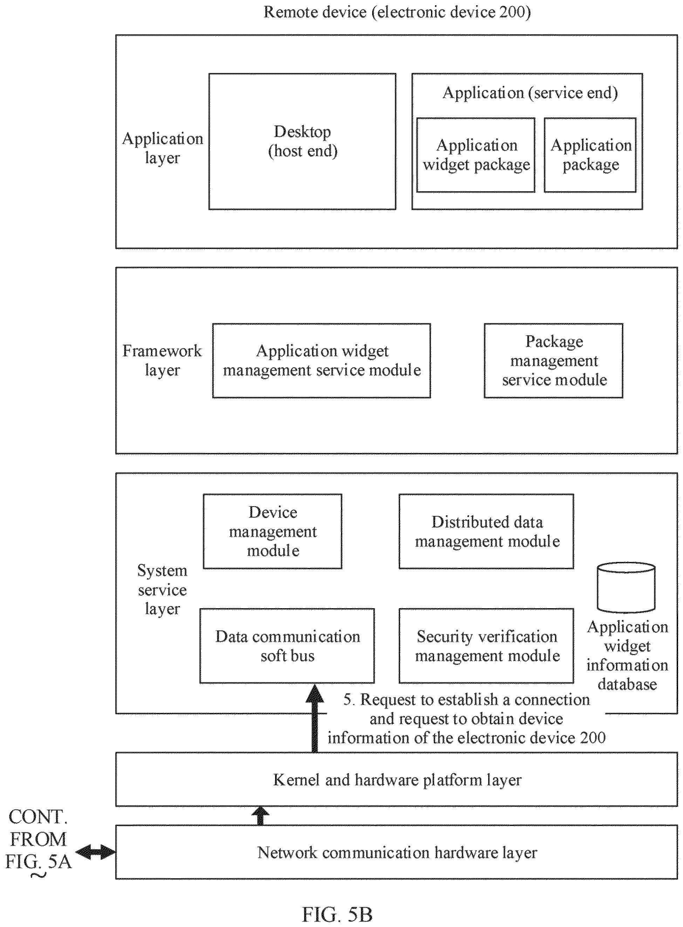

**With reference to** **FIG. 5A** **and** **FIG. 5B****, the following describes an example of a possible cooperation manner between modules in the electronic device 100 and the electronic device 200 in the trusted connection establishment phase.**

Step 1: A desktop of the electronic device 100 detects an event that triggers establishment of a trusted connection, and then the desktop may invoke an application widget management service module of the electronic device 100 to obtain a device information list.

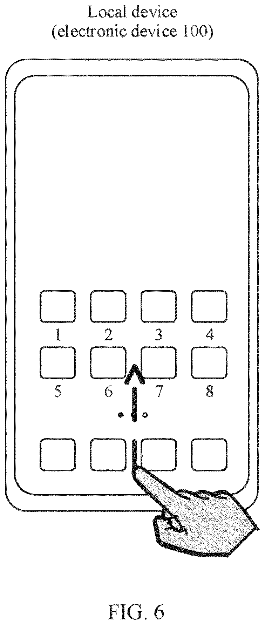

For example, the event that triggers establishment of the trusted connection may be an operation of sliding a finger up on the desktop by a user shown in FIG. 6.

Step 2: The application widget management service of the electronic device 100 may access a device management module, to request the device management module to obtain the device information list.

Step 3: The device management module of the electronic device 100 may access a data communication soft bus, to request to obtain remote device information (that is, device information of the electronic device 200).

Step 4: The data communication soft bus of the electronic device 100 may request, by using a kernel and hardware platform layer, and a network communication hardware layer, the electronic device 200 to establish a connection and request to obtain the remote device information.

Step 5: The data communication soft bus of the electronic device 200 may receive, by using a kernel and hardware platform layer and a network communication hardware layer, the request for establishing the connection and the request for obtaining the remote device information that are sent by the electronic device 100, and then the electronic device 200 may establish the connection with the electronic device 100 by invoking a data communication soft bus, and send the device information of the electronic device 200 to the electronic device 100.

Step 6: After the electronic device 100 receives the device information of the electronic device 200, the device management module of the electronic device 100 may invoke a security verification management module, to request the security verification management module to perform trusted verification on the electronic device 200. If the trusted verification succeeds, it may be determined that the connection established between the electronic device 100 and the electronic device 200 is the trusted connection.

After the electronic device 100 establishes the trusted connection with the electronic device 200, the electronic device 100 may obtain application widget information of the electronic device 200 based on the trusted connection, and store the application widget information of the electronic device 200.

For example, a possible implementation in which the electronic device 100 obtains and stores the application widget information of the electronic device 200 may be an implementation described in the following phase 2 (step S406 to step S410). This is described in detail below.

### Phase 2: Obtain and store the application widget information

S406 and S407: The electronic device 100 detects an event that triggers obtaining of the application widget information, and in response to the event, the electronic device 100 sends, to the electronic device 200, a request for obtaining the application widget information.

The event that triggers obtaining of the application widget information may include but is not limited to an operation (for example, a finger slide-up operation)/instruction (for example, a voice command) that the user triggers display of an application widget management interface on the desktop (for example, display and management of user interfaces of application widgets of the local device and the remote device).

In some embodiments, the electronic device 100 may be further triggered based on a fixed occasion to obtain the application widget information from the electronic device 200. For example, the electronic device 100 may obtain the application widget information from the electronic device 200 at intervals, that is, obtain the application widget information from the electronic device 200 based on a fixed period. In other embodiments, the electronic device 100 may alternatively be triggered, based on a specific characteristic timing (for example, power-on, restart, screen unlocking, and system update) of the system to obtain the application widget information from the electronic device 200. The event that triggers obtaining of the application widget information is not limited in this embodiment of this application.

S408 and S409: The electronic device 200 queries an application widget information list 1 (that is, a local application widget information list of the electronic device 200), and sends the application widget information list 1 to the electronic device 100.

Specifically, after receiving the request for obtaining the application widget information sent by the electronic device 100, the electronic device 200 may query all pieces of local application widget information of the electronic device 200, where all pieces of local application widget information of the electronic device 200 may form the application widget information list 1. After the query is completed, the electronic device 200 may send the application widget information list 1 to the electronic device 100.

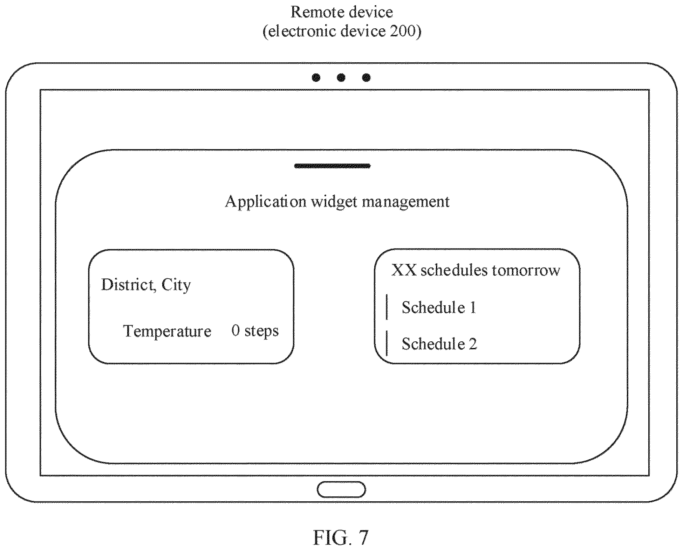

For example, as shown in FIG. 7, the interface currently displayed by the electronic device 200 is an application widget management interface, and the interface may include all local application widgets of the electronic device 200, for example, a Health application widget and a schedule application widget. In this case, the application widget information list 1 may include Health application widget information and schedule application widget information.

In some embodiments, step S408 and step S409 may be periodically performed, and execution does not need to be triggered after the electronic device 100 sends the request for obtaining the application widget information.

In some embodiments, the application widget information list 1 may not include all pieces of local application widget information of the electronic device 200, but include only some pieces of local application widget information of the electronic device 200 (for example, some pieces of common application widget information of the electronic device 200).

S410: The electronic device 100 stores the application widget information list 1.

Specifically, after receiving the application widget information list 1 sent by the electronic device 200, the electronic device 100 may store the application widget information list 1, so that when the user wants to view the application widgets of the electronic device 200 on the electronic device 100, the application widgets of the electronic device 200 may be displayed based on the application widget information list 1.

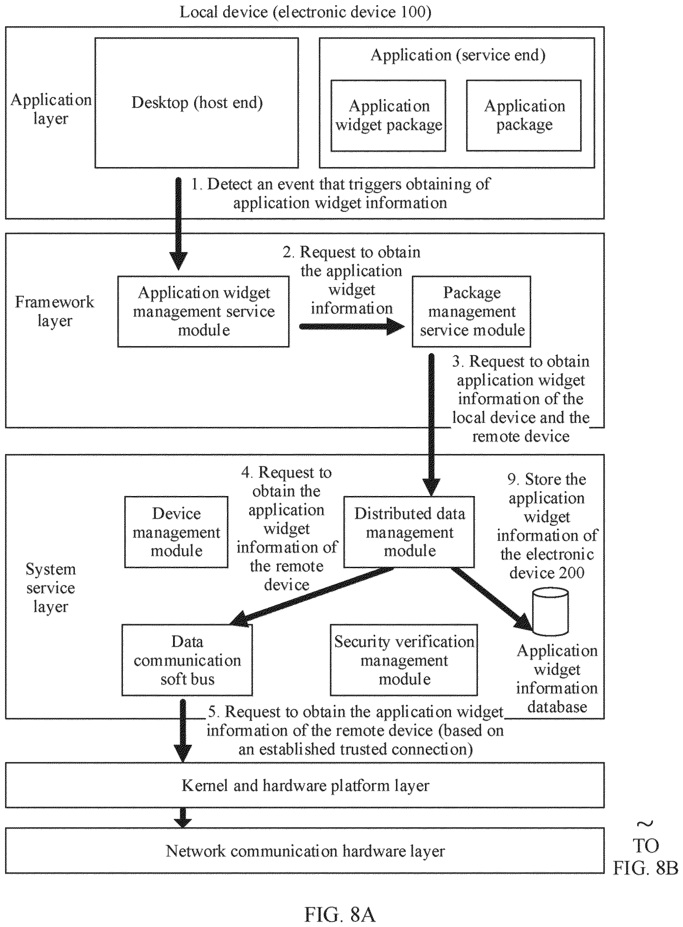

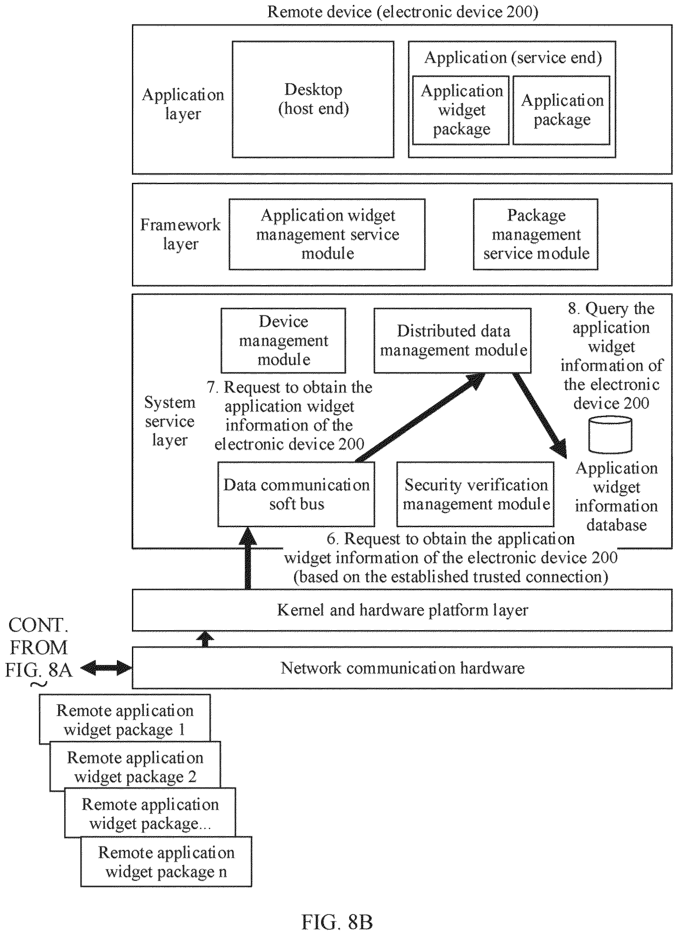

**With reference to** **FIG. 8A** **and** **FIG. 8B****, the following describes an example of a possible coordination manner between modules in the electronic device 100 and the electronic device 200 in the foregoing obtaining and storing application widget information phase.**

Step 1: A desktop of the electronic device 100 detects an event that triggers obtaining of application widget information, and then the desktop may invoke an application widget management service module of the electronic device 100 to obtain an application widget information list.

For example, the event that triggers obtaining of the application widget information may be an operation of sliding a finger up on the desktop by the user shown in FIG. 6.

Step 2: The application widget management service of the electronic device 100 may access a package management service module, to request the package management service module to obtain the application widget information list.

The application widget information list may include a local application widget information list of the electronic device 100 (for example, a list of all pieces of local application widget information of the electronic device 100) and a local application widget information list of the electronic device 200 (for example, a list of all pieces of local application widget information of the electronic device 200).

Step 3: The packet management service module of the electronic device 100 may access a distributed data management module, to request to obtain the application widget information lists of the local device and the remote device.

The application widget information list of the local device is the local application widget information list of the electronic device 100, and the distributed data management module may directly query an application widget information database. However, the application widget information list of the remote device (that is, the local application widget information list of the electronic device 200) needs to be obtained by using the following step 4 to step 9.

Step 4: The distributed data management module of the electronic device 100 may access a data communication soft bus, to request to obtain application widget information of the remote device (that is, local application widget information of the electronic device 200).

Step 5: The data communication soft bus of the electronic device 100 may request, based on a trusted connection established with the electronic device 200 in advance, (for example, by using a kernel and hardware platform layer, and a network communication hardware layer) to obtain remote device information from the electronic device 200.

Step 6: The data communication soft bus of the electronic device 200 may receive, by using the kernel and hardware platform layer and the network communication hardware layer, the request that is sent by the electronic device 100 and that is for obtaining the application widget information of the electronic device 200.

Step 7: A data communication soft bus of the electronic device 200 may access a distributed data management module, to request to obtain the application widget information of the electronic device 200.

Step 8: The distributed data management module of the electronic device 200 may directly query the application widget information of the electronic device 200 in an application widget information database. After the query is completed, the application widget information of the electronic device 200 may be sent to the electronic device 100 based on the trusted connection established with the electronic device 100 in advance.

The application widget information of the electronic device 200 may include information, for example, a remote application widget package 1, a remote application widget package 2, ..., and a remote application widget package n shown in FIG. 8A and FIG. 8B.

Step 9: After receiving the application widget information of the electronic device 200, the electronic device 100 may store the application widget information of the electronic device 200 in the application widget information database by using the distributed data management module.

In this embodiment of this application, the application widget information of the electronic device 200 obtained by the electronic device 100 is an application widget package corresponding to each application widget of the electronic device 200.

In some embodiments, because the application widget is provided by the application, the electronic device 100 may alternatively obtain the application information of the electronic device 200, where the application information may include an application package and an application widget package that correspond to each application of the electronic device 200, or the application information may include an application package corresponding to each application of the electronic device 200, where the application package may include an application widget package. Then, the electronic device 100 may display the application widgets of the electronic device 200 based on the obtained application information of the electronic device 200.

When detecting that the user wants to view the application widget information list, the electronic device 100 may display the application widgets of the local device (that is, the electronic device 100) based on the application widget information obtained in the foregoing phase 2, and/or application widgets of one or more remote devices (for example, the electronic device 200) that establish the trusted connection with the local device.

For example, a possible implementation in which the electronic device 100 displays the application widget may be an implementation described in the following phase 3 (step S411 and step S412). This is described in detail below.

### Phase 3: Display the application widget

S411 and S412: The electronic device 100 detects the operation of viewing the application widget of the electronic device 200 by the user, and the electronic device 200 displays, in response to the operation, the application widget of the electronic device 200 based on the application widget information list 1 (that is, the local application widget information list of the electronic device 200).

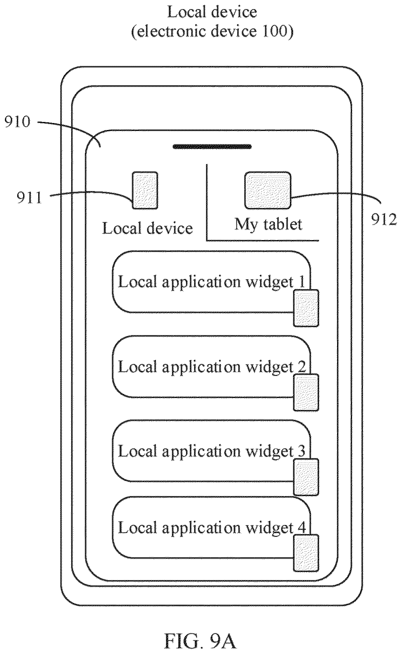

For example, the electronic device 100 may detect an operation of opening the application widget management interface by the user (for example, the operation of sliding the finger up on the desktop by the user shown in FIG. 6). In response to the operation, the electronic device 100 may display a user interface 910 shown in an example in FIG. 9A. The user interface may be the application widget management interface. The application widget management interface may not only display the local application widget of the electronic device 100, but also display the application widgets (for example, all application widgets of the electronic device 200) of the one or more remote devices that establish the trusted connection with the electronic device 100.

As shown in FIG. 9A, in a possible implementation, after opening the application widget management interface, the electronic device 100 may display the application widgets (such as, a local application widget 1, a local application widget 2, a local application widget 3, and a local application widget 4) of the local device (that is, the electronic device 100) by default.

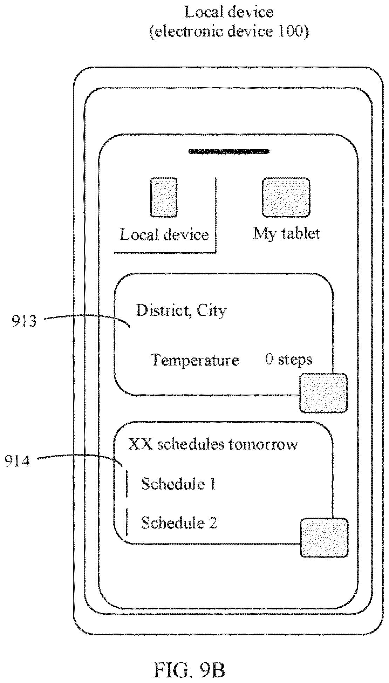

In another possible implementation, after opening the application widget management interface, the electronic device 100 may first display, on the application widget management interface, only an identifier option (for example, a "Local device" option 911) of the electronic device 100 and identifier options (such as, a "My tablet" option 912) of the one or more remote devices that establish the trusted connection with the electronic device 100; and when the identifier option of the electronic device 100 is selected, or an identifier option of a specific remote device that establishes the trusted connection with the electronic device 100 is selected, correspondingly display an application widget corresponding to the electronic device on the application widget management interface. As shown in FIG. 9A, when the identifier option of the local machine (that is, the electronic device 100) is selected, the local application widgets of the electronic device 100 are displayed on the application widget management interface. As shown in FIG. 9B, when the electronic device 100 detects the operation of viewing the application widgets of the electronic device 200 by the user (for example, the operation of tapping the "My tablet" option 912 by the user shown in FIG. 9A), and the identifier option (for example, the "My tablet" option 912) of the electronic device 200 is enabled to be selected, the application widgets (such as, an application widget 913 and an application widget 914) of the electronic device 200 are displayed on the application widget management interface.

In this case, the electronic device 100 may obtain and store, in the background, application widget information lists of other remote devices that include the electronic device 200 and that establish the trusted connection with the electronic device 100, or when the user opens the application widget management interface of the electronic device 100, the electronic device 100 is triggered to obtain application widget information lists of other remote device that include the electronic device 200 and that establish the trusted connection with the electronic device 100, and store the application widget information lists. When the identifier option of the electronic device 200 is selected, the electronic device 100 may display, based on the stored application widget information list of the electronic device 200, the application widgets of the electronic device 200 on the application widget management interface. That is, in this manner, the phase 3 is executed after the foregoing phase 2 (that is, the phase of obtaining and saving the application widget information) is executed. In this way, because the application widget information lists related to the other electronic devices have been stored in advance, the application widget information lists of the electronic devices may be loaded on the application widget management interface at a faster speed, so that the user can view application widgets of the other electronic devices more quickly, and user experience is better.

Alternatively, the electronic device 100 may obtain the application widget information list of the electronic device 200 from the electronic device 200 when detecting that the identifier option of the electronic device 200 is selected; and display, based on the obtained application widget information list of the electronic device 200, the application widgets of the electronic device 200 on the application widget management interface corresponding to the identifier option of the electronic device 200. That is, in this manner, the foregoing phase 2 (that is, the phase of obtaining and saving the application widget information) is performed after the step S411 in the phase 3 is completed. In this way, when the electronic device 100 establishes a trusted connection with a plurality of other remote devices including the electronic device 200, network traffic and power consumption that are generated when the electronic device 100 obtains the application widget information lists of the other remote devices can be reduced. This helps save resources.

Both the identifier option of the electronic device 100 and the identifier option of the electronic device 200 are generated by the electronic device 100 based on the device information of the electronic device 100 and the device information of the electronic device 200, respectively.

Optionally, as shown in FIG. 9A and FIG. 9B, when the application widgets are displayed on the application widget management interface, an identifier of an electronic device corresponding to each application widget may be further displayed on the application widget, so that the user can learn of the electronic device that provides the application widget.

Optionally, when the user opens the application widget management interface again within a preset time period (for example, 30s or 1 minute) after exiting the user interface corresponding to the "My tablet" option shown in FIG. 9B, the user may still directly display the user interface corresponding to the "My tablet" option shown in FIG. 9B, instead of displaying the user interface corresponding to the "Local device" option by default.

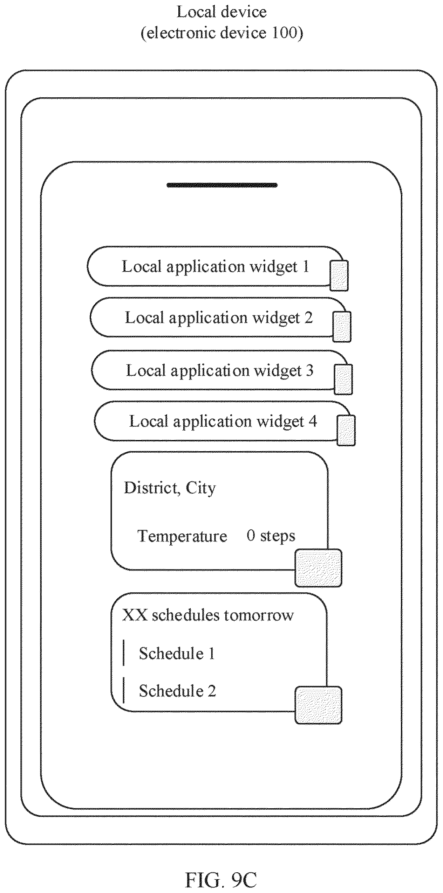

Optionally, for example, as shown in FIG. 9C, the application widget management interface may alternatively simultaneously display the application widgets of the local device and the application widgets of the other remote devices that establish the trusted connection with the local device. The user may distinguish, by using the identifier of the corresponding electronic device displayed on each application widget, an electronic device that provides the application widgets.

It should be noted that a display manner of the user interface for displaying the application widgets is not limited in this embodiment of this application.

Through implementation of the method shown in FIG. 4A and FIG. 4B, the electronic device 100 (that is, the local device) may establish the trusted connection with the one or more remote devices (for example, the electronic device 200). By using the trusted connection, the electronic device 100 may obtain the application widget information lists provided by the one or more remote devices, and may display, based on the application widget information lists, the application widgets provided by the one or more remote devices, so that a problem that the user cannot view cross-device application widgets on the local device can be resolved, and user experience can be improved.

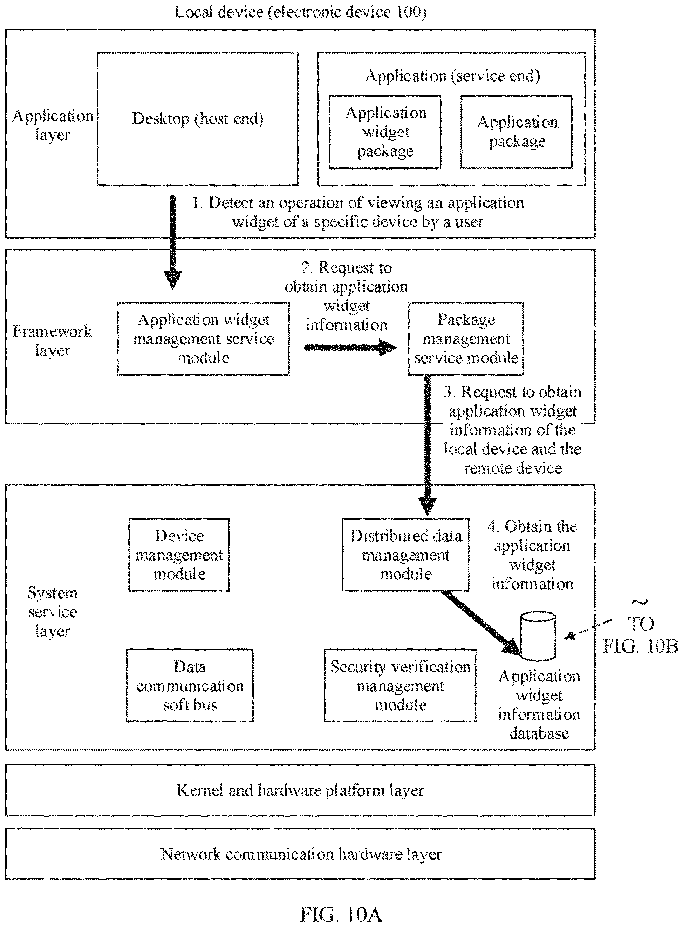

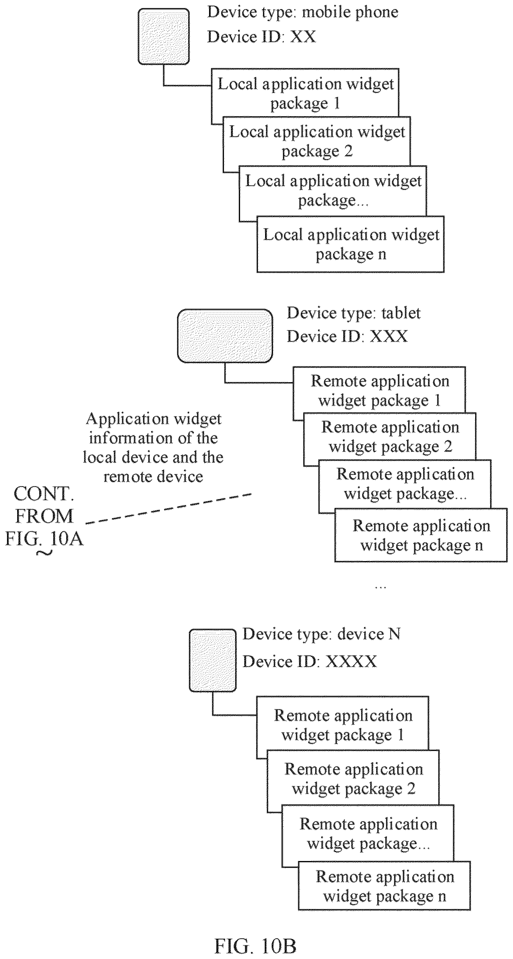

**With reference to** **FIG. 10A** **and** **FIG. 10B****, the following describes an example of a possible cooperation manner between modules in the electronic device 100 in the foregoing phase of displaying the application widgets.**

Step 1: A desktop of the electronic device 100 detects the operation of viewing an application widget of a specific device (for example, the electronic device 100 or the electronic device 200) by a user, and then the desktop may invoke an application widget management service module of the electronic device 100 to obtain an application widget information list.

Step 2: The application widget management service module of the electronic device 100 may access a package management service module, to request the package management service module to obtain the application widget information list.

Step 3: The packet management service module of the electronic device 100 may access a distributed data management module, to request to obtain the application widget information lists of the local device and the remote device.

Optionally, the package management service module may request to obtain only the application widget information list of the specific device from the distributed data management module, instead of application widget information lists of all devices (that is, the local device and all remote devices that establish a trusted connection with the local device).

Step 4: The distributed data management module of the electronic device 100 may obtain the application widget information list from an application widget information database, and then may return the obtained application widget information list to the desktop to display the application widget of the corresponding electronic device.

The distributed data management module may obtain only the application widget information list of the specific device, or may obtain the application widget information lists of all the devices (that is, the local device and all the remote devices that establish the trusted connection with the local device).

Still refer to FIG. 10A and FIG. 10B. The application widget information database may store the application widget information list of the local device and application widget information lists that are obtained by the local device and that are of the one or more remote devices that establish the trusted connection with the local device, as shown in FIG. 10A and FIG. 10B. The application widget information list of each electronic device may include a device type of the electronic device, a device ID of the electronic device, and one or more application widget packages provided by the electronic device. Compared with an application entity of the application widget package, the application widget package is a lightweight installation package. In this way, the distributed data management module may query, based on the device ID and/or the device type, the application widget package of the corresponding electronic device.

If the electronic device 100 (the local device) is a mobile phone, a device type recorded in the application widget information list of the electronic device 100 is the mobile phone, a device ID is XX (that is, the device ID of the electronic device 100), and application widget packages provided by the electronic device 100 are a local application widget package 1, a local application widget package 2, ..., and a local application widget package n. If the electronic device 200 (remote device) is a tablet, a device type recorded in the application widget information list of the electronic device 200 is the tablet, a device ID is XXX (that is, the device ID of the electronic device 200), and application widget packages provided by the electronic device 200 are a remote application widget package 1, a remote application widget package 2, ..., and a remote application widget package n.

In this embodiment of this application, each application widget package may include static information of an application widget corresponding to the application widget package. The static information may include preset information (for example, title information like a location and an air temperature, and dimension information) that can be presented by the application widget, but may do not include user data, that is, information (for example, information like a preview of the application widget, a title, and a dimension) that the application widget can present in preview mode (or in an initialization state), and may do not change over time or user behavior.

Refer to FIG. 9B. It can be easily learned that both the application widget 913 and the application widget 914 present static information in FIG. 9B. The static information in the application widget 913 may include location information (for example, "District, City"), air temperature information (for example, "Temperature"), step number information (for example, "0 steps"), and the like. The static information in the application widget 914 may include schedule information (for example, "XX schedules tomorrow", "Schedule 1", and "Schedule 2"), and the like.

It can be easily learned that in FIG. 9B, the foregoing solution 1 (the electronic device 100 statically displays the application widgets in a scenario in which it is detected that the user views the application widgets on the desktop) is used to display the application widgets of the remote device that establishes the trusted connection with the electronic device 100. In other words, the electronic device 100 may obtain only static information of the application widgets in the foregoing phase 2 (that is, the phase of obtaining and saving the application widget information), and then statically display the application widgets of the remote device based on the static information.

In some embodiments, when the application widget is displayed statically, the electronic device 100 may not obtain the installation package of the application widget, but only obtain related information used for statically displaying the application widget. In this way, system resources can be saved, and a cost waste can be reduced. The related information may include a widget identifier of the application widget and description information of the application widget. The widget identifier of the application widget may include a package name and a module name of the application widget. The package name, for example, com.xxx.xxx.sporthealth, may indicate that an application corresponding to this application widget is Health. The module name, for example, com.xxx.xxx.weather, may indicate that this application widget is a weather-type application widget. The description information of the application widget may include but is not limited to information, for example, a preview image of the application widget, a title (for example, Health, weather, or a location), and a dimension. In this case, if the electronic device 100 detects an operation of adding the application widget to the desktop by the user, the electronic device 100 may obtain the installation package of the application widget from the remote device again, may install the application widget after obtaining the installation package of the application widget; and after the installation is complete, may add the application widget to the desktop for display.

After the user starts to use a specific application widget (for example, the user adds a specific application widget to the desktop), an application widget package corresponding to the application widget may be further associated with dynamic information of the application widget. The dynamic information may include information presented by specific data (that is, user data, which may also be referred to as personalized data) generated by the user in a process of using the application widget. The specific data may be data actually corresponding to an information type (for example, a location or a quantity of movement steps) that can be presented by the application widget, and may change over time or user behavior.

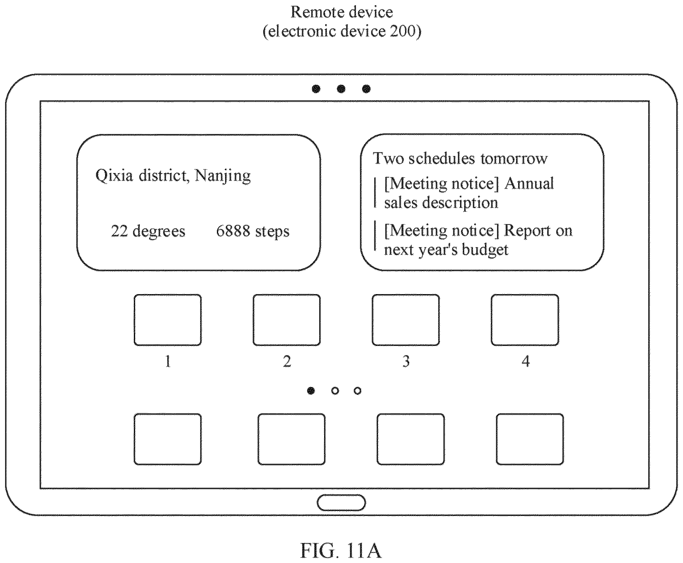

For example, as shown in FIG. 11A, both the application widget 913 (the Health application widget) and the application widget 914 (the schedule application widget) in FIG. 9B are added by the user to the desktop of the electronic device 200 (the remote device). In other words, the user has started to use the two application widgets. It can be learned that, different from that in FIG. 9B, because the user has started to use the two application widgets, the two application widgets generate dynamic information. Further, corresponding dynamic information is displayed on both the two application widgets. For example, an area in which the user is located (for example, "Qixia district, Nanjing"), a temperature (for example, "22 degrees") in the area in which the user is located, a quantity of current movement steps (for example, "6888 steps") of the user, and the like are displayed on the application widget 913. For another example, a quantity of schedules of the user tomorrow (for example, "Two schedules tomorrow") and specific schedules of the user tomorrow (for example, "Annual sales description", and "Report on next year's budget") are displayed on the application widget 914.

To display an application widget including dynamic information that is of the remote device on the electronic device 100 (the local device), the foregoing solution 2 (the electronic device 100 dynamically displays the application widget in a scenario in which it is detected that the user views the application widget on the desktop) may be used. Therefore, the foregoing solution 2 is different from the foregoing solution 1 in that when the electronic device 100 obtains the static information of the application widget in the foregoing phase 2 (that is, the phase of obtaining and saving the application widget information), if the application widget further includes dynamic information, the electronic device 100 further needs to obtain the dynamic information of the application widget. Then, the electronic device 100 stores both the static information and the dynamic information of the application widget, and dynamically displays the application widget of the remote device based on the static information and the dynamic information of the application widget. Subsequently, only the dynamic information of the application widget needs to be obtained, the application widget can be displayed in a state same as that on the remote device.

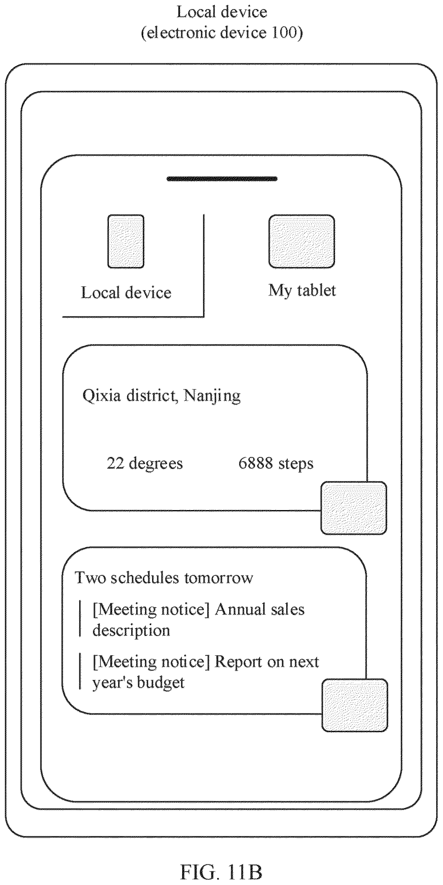

Refer to FIG. 11B. Both the two application widgets shown in FIG. 11B are application widgets including dynamic information. It can be learned from FIG. 11B and FIG. 11A that a state of the application widgets displayed on the electronic device 100 is consistent with a state of the application widgets displayed on the electronic device 200. In this way, the user can view a real-time state of the application widgets of the remote device on the local device. This improves user experience.

Optionally, as shown in FIG. 11B, when the application widgets are displayed on the application widget management interface, an identifier of an electronic device corresponding to each application widget may be further displayed on the application widget, so that the user can learn of the electronic device that provides the application widget.

Optionally, when the user opens the application widget management interface again within a preset time period (for example, 30s or 1 minute) after exiting the user interface corresponding to the "My tablet" option shown in FIG. 11B, the user may still directly display the user interface corresponding to the "My tablet" option shown in FIG. 11B, instead of displaying the user interface corresponding to the "Local device" option by default.

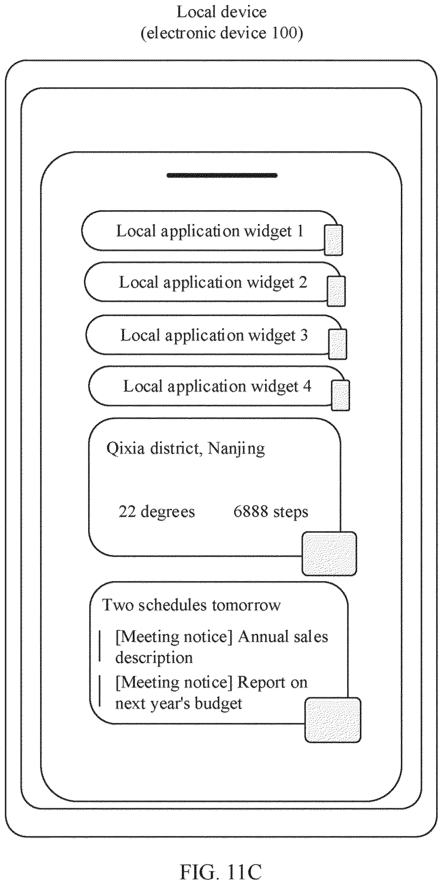

Optionally, for example, as shown in FIG. 11C, the application widget management interface may alternatively simultaneously display the application widgets of the local device and the application widgets of the other remote devices that establish the trusted connection with the local device. The user may distinguish, by using the identifier of the corresponding electronic device displayed on each application widget, an electronic device that provides the application widgets.

It should be noted that a display manner of the user interface for displaying the application widgets is not limited in this embodiment of this application.

In this embodiment of this application, an application widget including only static information (for example, the application widgets shown in FIG. 9B) may be referred to as a static application widget, and an application widget including dynamic information (for example, the application widgets shown in FIG. 11B) may be referred to as a dynamic application widget.

It can be easily learned that a static display manner of the application widgets shown in FIG. 9B can only enable the user to view, on the local device, available application widgets provided by the remote device, but cannot enable the user to view, on the local device, real-time states of these application widgets of the remote device. Compared with the static display manner of the application widgets, a dynamic display manner of the application widgets shown in FIG. 11B enables the user to view, on the local device, the available application widgets provided by the remote device, and enables the user to view, on the local device, the real-time states of these application widgets of the remote device (that is, the states of the application widgets displayed on the local device are consistent with those displayed on the remote device). This further improves user experience.

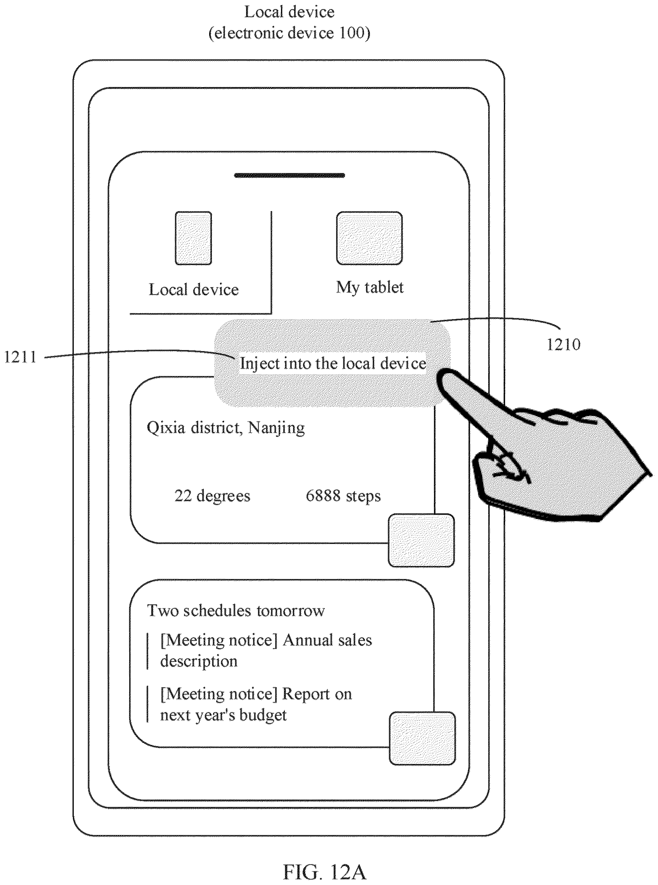

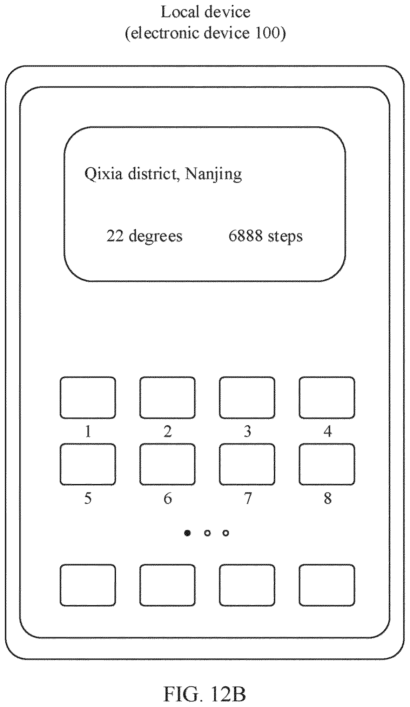

In some embodiments, the dynamic application widgets shown in FIG. 11B may not only be displayed on the application widget management interface of the local device, but also may be added to the desktop of the local device for display. For example, referring to FIG. 12A, if the user wants to add a Health application widget to the desktop, the electronic device 100 may detect an operation (for example, a touch and hold operation) of the user on the Health application widget, and in response to the operation, the electronic device 100 may display a window 1210. The window 1210 may include an option 1211 (for example, "Inject into the local device"). Further, the electronic device 100 may detect an operation (for example, a tap operation) of the user on the option 1211. In response to the operation, the electronic device 100 may add the Health application widget to the desktop for display, as shown in FIG. 12B. In a possible implementation, the user may also add the application widget to the desktop of the local device for display by using a drag-and-drop operation. A specific operation of adding the application widget by the user to the desktop of the local device for display is not limited in this embodiment of this application.

In this way, the application widgets of the remote device can be directly displayed on the desktop of the local device, and the user can view the state of the application widgets of the remote device more conveniently. This further improves user experience.

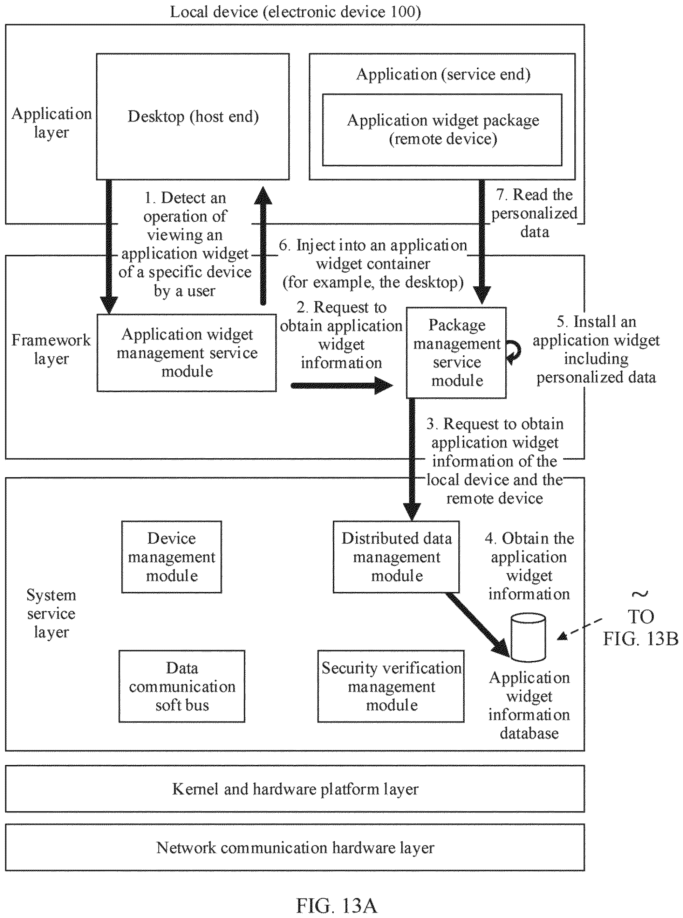

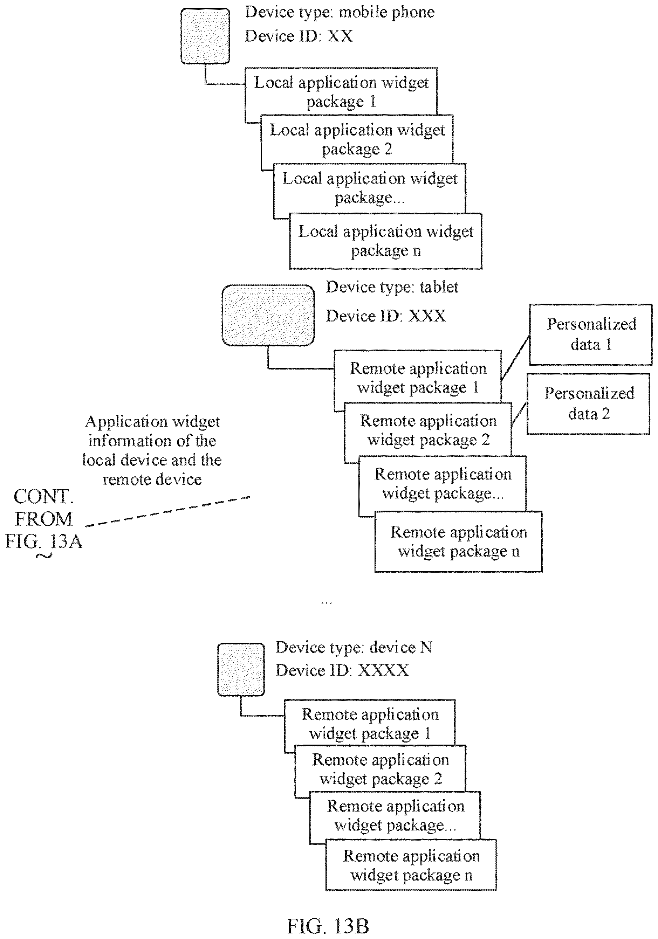

**Refer to** **FIG. 10A** **and** **FIG. 10B****. It can be easily learned that** **FIG. 10A** **and** **FIG. 10B** **show a possible coordination manner between modules inside the electronic device 100 when the application widgets (for example, the application widgets shown in** **FIG. 9B****) are statically displayed in a scenario in which it is detected that the user views the application widgets on the desktop. With reference to** **FIG. 13A** **and** **FIG. 13B****, the following describes an example of a possible coordination manner between modules inside the electronic device 100 when the application widgets (for example, the application widgets shown in** **FIG. 11B****) are dynamically displayed in a scenario in which it is detected that the user views the application widgets on the desktop.**

Step 1: A desktop of the electronic device 100 detects the operation of viewing an application widget of a specific device (for example, the electronic device 100 or the electronic device 200) by a user, and then the desktop may invoke an application widget management service module of the electronic device 100 to obtain an application widget information list.

Step 2: The application widget management service module of the electronic device 100 may access a package management service module, to request the package management service module to obtain the application widget information list.

Step 3: The packet management service module of the electronic device 100 may access a distributed data management module, to request to obtain the application widget information lists of the local device and the remote device.

Optionally, the package management service module may request to obtain only the application widget information list of the specific device from the distributed data management module, instead of application widget information lists of all devices (that is, the local device and all remote devices that establish a trusted connection with the local device).

Step 4: The distributed data management module of the electronic device 100 may obtain the application widget information list from an application widget information database.

It can be learned that, unlike FIG. 10A and FIG. 10B, when the application widgets include dynamic information (that is, personalized data), the application widget information database may further store the dynamic information (for example, personalized data 1 and personalized data 2 in FIG. 13A and FIG. 13B) of the application widgets.

Still refer to FIG. 13A and FIG. 13B. The following describes the personalized data by using an example. It is assumed that an electronic device whose device type is a tablet stored in the application widget information database is the electronic device 200, an application widget corresponding to a remote application widget package 1 in the electronic device is a Health application widget in FIG. 11B, and an application widget corresponding to the remote application widget package 2 is the schedule application widget in FIG. 11B. In this case, the personalized data 1 may include the data of the area (for example, "Qixia district, Nanjing") in which the user is located displayed on the Health application widget, the temperature data (for example, "22 degrees") of the area in which the user is located, the data of the quantity of current movement steps (for example, "6888 steps") of the user, and the like. The personalized data 2 may include the data of the quantity of schedules of the user tomorrow (for example, "two schedules tomorrow") displayed on the schedule application widget, and the specific schedule data tomorrow (for example, "Annual sales description", "Report on next year's budget").

After obtaining the application widget information list, the distributed data management module may return the application widget information list to the package management service module, so as to perform subsequent steps.

Step 5: The package management service module of the electronic device 100 installs the application widget that includes the personalized data.

Specifically, after receiving the application widget information list returned by the distributed data management module, the package management service module may determine whether an application widget package in the returned application widget information list is associated with personalized data (that is, determine which application widget includes dynamic information). If the application widget package in the returned application widget information list is associated with the personalized data, the package management service module needs to install the application widget, that is, the package management service module is responsible for installing the application widget including the dynamic information.

An application widget that does not include dynamic information does not need to be installed. Only static information is displayed on the local device.

Step 6: The application widget management service module of the electronic device 100 injects the successfully installed application widget including the dynamic information into an application widget container (for example, the desktop).

After the package management service module installs the application widget including the dynamic information, the application widget management service module may inject the application widget into the application widget container, so that the application widget can run in the container.

In this embodiment of this application, the application widget management interface may be a user interface provided by the desktop application, and the application widget container may be provided by the desktop application.

It should be noted that each application may provide one or more containers. When the application provides only one container, a plurality of user interfaces of the application may share one container. When the application provides a plurality of containers, each user interface of the application may independently use one or more containers. For example, a plurality of application widgets displayed on the application widget management interface may be injected into a same container, or may be injected into a plurality of containers (for example, one application widget is injected into one container).

In the embodiment shown in FIG. 11B, an example in which the application providing the application widget container is the desktop application is used. This is not limited thereto. Alternatively, another application may provide the application widget container. This is not limited in this embodiment of this application.

Step 7: The application widget including the personalized data that is of the remote device reads the personalized data from the package management service module.

Specifically, after the application widget of the remote device is installed and injected into the application widget container, the application widget may start to run, and read personalized data corresponding to the application widget from the package management service module. In this way, a state of the application widget displayed on the electronic device 100 may be consistent with a state of the application widget displayed on the remote device.

In this embodiment of this application, the application widget information of the electronic device 200 obtained by the electronic device 100 is an application widget package corresponding to each application widget of the electronic device 200 and dynamic information of the application widget.

In some embodiments, because the application widget is provided by the application, the electronic device 100 may alternatively obtain application information and dynamic information of the application widgets of the electronic device 200, where the application information may include an application package and an application widget package that correspond to each application of the electronic device 200, or the application information may include an application package corresponding to each application of the electronic device 200, where the application package may include an application widget package. Then, the electronic device 100 may display the application widgets of the electronic device 200 based on the obtained application information and the obtained dynamic information of the application widgets of the electronic device 200.

When the electronic device 100 dynamically displays the application widgets of the remote device, after the electronic device 100 installs the application widgets, subsequently, to view the states of the application widgets of the remote device in real time, the electronic device 100 may periodically (for example, every 1 second, 10 seconds, 30 seconds, or 1 minute) obtain the user data (that is, personalized data) generated in a running process of the application widgets from the remote device.

When the electronic device 100 statically displays the application widgets of the remote device, the electronic device 100 may not install the application widgets, or may install the application widgets. For example, the electronic device 100 may install the application widgets by using installation packages of the application widgets (namely, the application widget packages) by using the package management service module. When the application widgets are installed, the user may also add the application widgets to the desktop for display in the manner shown in FIG. 12A. When the application widgets are not installed, and the user adds the application widgets to the desktop for display in the example manner shown in FIG. 12A, the electronic device 100 installs the application widgets, and may display the application widgets on the desktop after the installation is completed.

The foregoing embodiment describes a process in which the electronic device 100 statically displays/dynamically displays the application widgets in a scenario in which it is detected that the user actively views the application widgets on the desktop by using the application widget management interface (that is, the foregoing solution 1 and solution 2). In some other embodiments of this application, in a specific scenario in which it is detected that information is associated with one or more application widgets (for example, a scenario in which the user inputs a keyword associated with the one or more application widgets for search), the electronic device 100 may further automatically recommend, to the user, and statically display/dynamically display the one or more application widgets associated with the foregoing specific scenario (that is, the foregoing solution 3 and solution 4).

When the electronic device 100 performs the foregoing solution 3 and solution 4, a process in which the electronic device 100 establishes a trusted connection with the remote device and a process in which the electronic device 100 obtains and stores the application widget information from the remote device are the same as those in the solution 1 and the solution 2. Reference may be made to the foregoing content, and details are not described herein again. Only a process of displaying application widgets is different from the foregoing solution 1 and solution 2. The following separately describes the process of displaying application widgets in the foregoing solution 3 and solution 4 by using a scenario in which a user inputs a keyword associated with one or more application widgets for search as an example.

**First, the following describes the solution 3 (the electronic device 100 statically displays the application widgets in a specific scenario in which it is detected that information is associated with the one or more application widgets).**

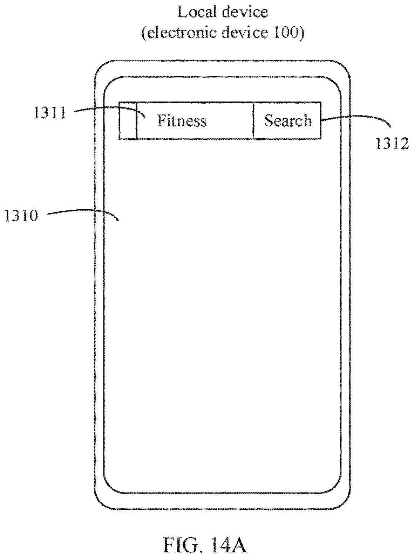

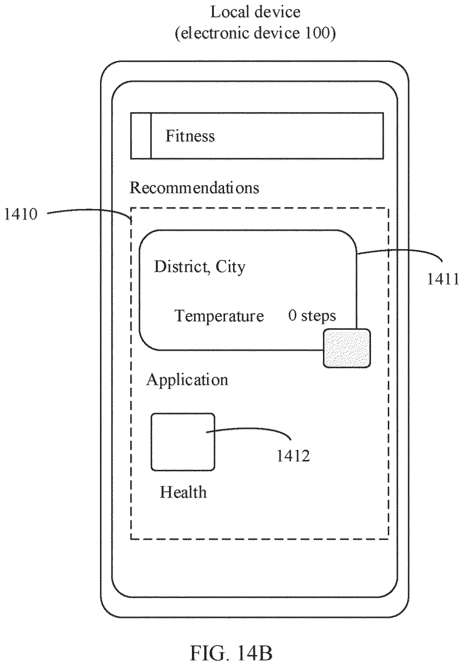

Refer to FIG. 14A and FIG. 14B. For example, as shown in FIG. 14A, the electronic device 100 may display a user interface 1310. The user interface may be a user interface (namely, a search interface) in a search scenario, and the user interface may include a search box 1311 and a search option 1312. The electronic device 100 may detect an operation that the user inputs a word "Fitness" in the search box 1311 and taps the search option 1312. In response to the operation, the electronic device 100 may use the word "Fitness" as a keyword for fuzzy query and matching an application widget related to the keyword in a local application widget information database. If the matching succeeds (to be specific, the electronic device 100 matches one or more application widgets related to the keyword), the electronic device 100 may statically display, in the area 1410 shown as an example in FIG. 14B, one or more application widgets (for example, the application widget 1411) related to the word "Fitness". In other words, the electronic device 100 may display only static information of the one or more application widgets. The one or more application widgets may be local application widgets of the electronic device 100, or may be application widgets of a remote device that establishes a trusted connection with the electronic device 100.

Optionally, the electronic device 100 may further display an application 1412 in the area 1410. The application may be an application that provides the application widget 1411, or may be an application related to the "Fitness" but is not an application that provides the application widget 1411.

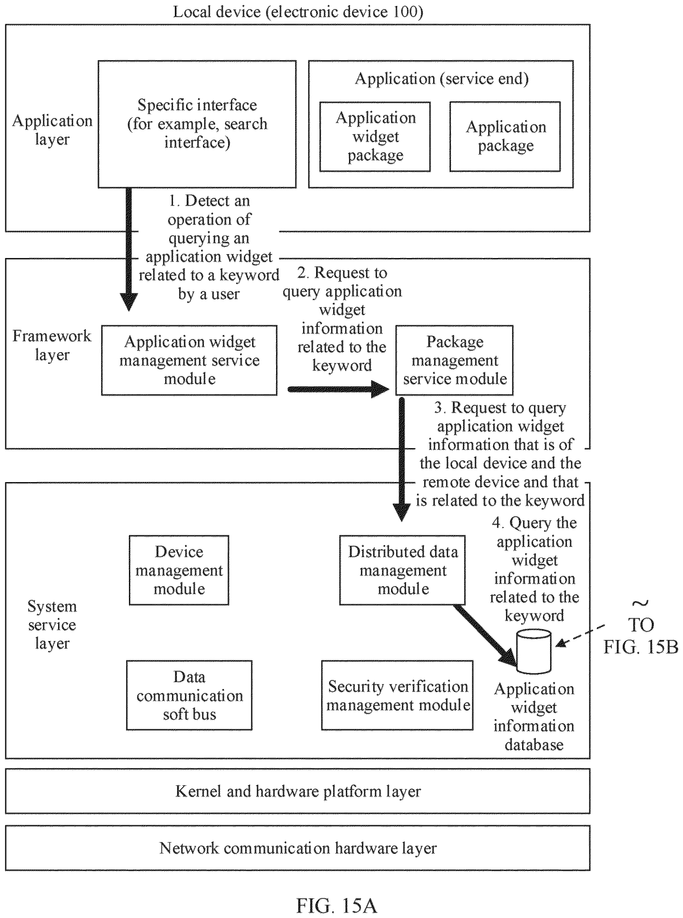

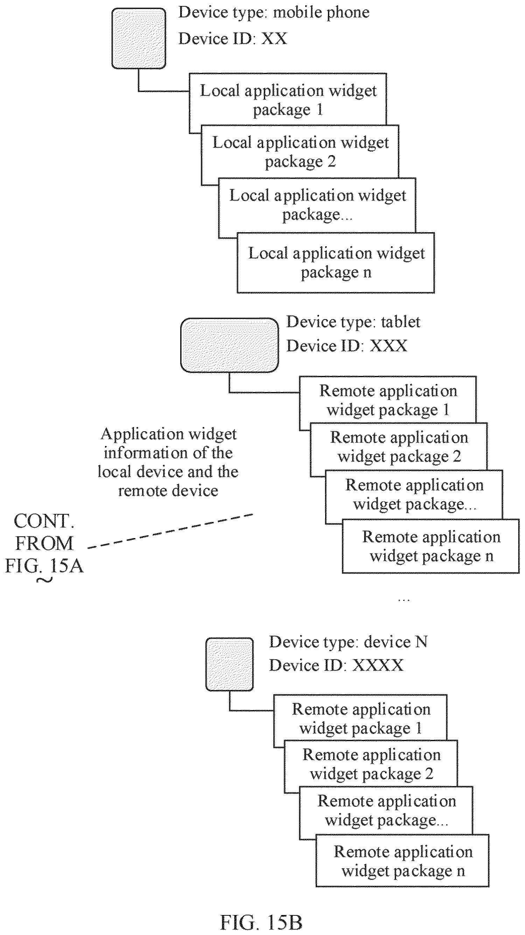

**With reference to** **FIG. 15A** **and** **FIG. 15B****, the following describes an example of a possible coordination manner between modules inside the electronic device 100 when the electronic device 100 statically displays an application widget (for example, the application widget shown in** **FIG. 14B****) in a specific scenario in which it is detected that information is associated with one or more application widgets.**

Step 1: The electronic device 100 detects, on a specific interface (for example, a search interface), an operation of querying an application widget related to a keyword by a user, and then, an application corresponding to the specific interface may invoke an application widget management service module of the electronic device 100 to query application widget information related to the keyword.

For example, the foregoing operation of querying the application widget related to the keyword by the user may be an operation of inputting the keyword (for example, the word "Fitness") in the search box 1311 shown in FIG. 14A and tapping the search option 1312 by the user.

The specific interface may be provided by a system application (that is, an app that cannot be uninstalled or whose App ID is less than 10000) or may be provided by a third-party application (that is, an application other than a system application). This is not limited in this embodiment of this application.

Step 2: The application widget management service module of the electronic device 100 may access a package management service module, to request the package management service module to query the application widget information related to the keyword.

Step 3: The packet management service module of the electronic device 100 may access a distributed data management module, to request to query application widget information that is of a local device and a remote device and that is related to the keyword.

Step 4: The distributed data management module of the electronic device 100 may query, in the application widget information database, the application widget information that is of the local device and the remote device and that is related to the keyword, and if the application widget information related to the keyword can be found, the distributed data management module may return the found application widget information related to the keyword to the specific interface for displaying the application widget related to the keyword. The application widget information of the remote device that is stored in the application widget information database is obtained by the electronic device 100 from the remote device. For a specific obtaining process, refer to related content of the process of obtaining the application widget information in the foregoing solution 1. Details are not described herein again.

It can be learned from the embodiment shown in FIG. 15A and FIG. 15B that, because the application widget information database does not store personalized data of the application widget associated with an application widget package, the found application widget information related to the keyword does not include dynamic information of the application widget, but includes only static information of the application widget. Further, the electronic device 100 statically displays the application widget related to the keyword based only on the static information of the application widget.

**The following describes the solution 4 (the electronic device 100 dynamically displays the application widget in the specific scenario in which it is detected that the information is associated with the one or more application widgets).**

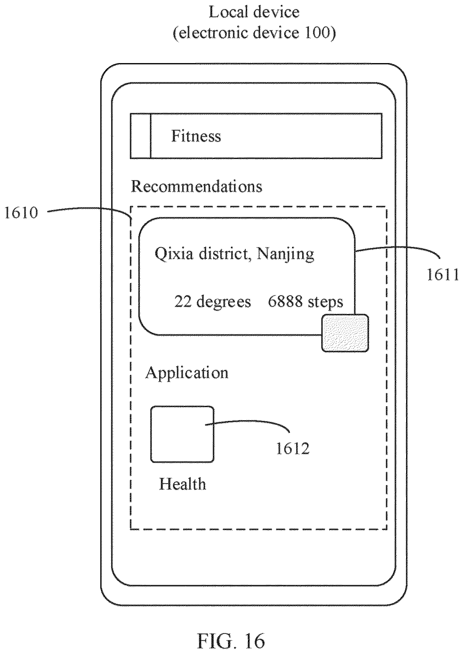

Refer to FIG. 14A and FIG. 16. For example, as shown in FIG. 14A, the electronic device 100 may detect the operation of the user inputting the word "Fitness" in the search box 1311 and tapping the search option 1312. In response to the operation, the electronic device 100 may use the word "Fitness" as the keyword for fuzzy query and matching an application widget related to the keyword in the local application widget information database. If the matching succeeds (to be specific, the electronic device 100 matches one or more application widgets related to the keyword), the electronic device 100 may dynamically display, in the area 1610 shown as an example in FIG. 16, the one or more application widgets (for example, the application widget 1611) related to the word "Fitness". In other words, the electronic device 100 may display dynamic information of the one or more application widgets. The one or more application widgets may be local application widgets of the electronic device 100, or may be application widgets of a remote device that establishes a trusted connection with the electronic device 100.

Optionally, the electronic device 100 may further display an application 1612 in the area 1610. The application may be an application that provides the application widget 1611, or may be an application related to the "Fitness" but is not an application that provides the application widget 1611.

It can be learned from FIG. 16 and FIG. 14B that the application widget 1611 shown in FIG. 16 and the application widget 1411 shown in FIG. 14B are a same application widget. A difference is that only static information of the application widget is displayed in FIG. 14B, but dynamic information of the application widget is displayed in FIG. 16.

It can be easily learned that, in the static display manner of the application widgets in FIG. 14B, the user can only learn, on the local device, which application widgets are related to the keyword input by the user, but cannot learn, on the local device, real-time states of these application widgets of the remote device. Compared with the static display manner of the application widgets, a dynamic display manner of the application widgets in FIG. 16 enables the user to learn, on the local device, which application widgets are related to the keyword input by the user, and enables the user to obtain, on the local device, the real-time states of the application widgets of the remote device, (that is, the states of the application widgets displayed on the local device are consistent with those displayed on the remote device). This further improves user experience.

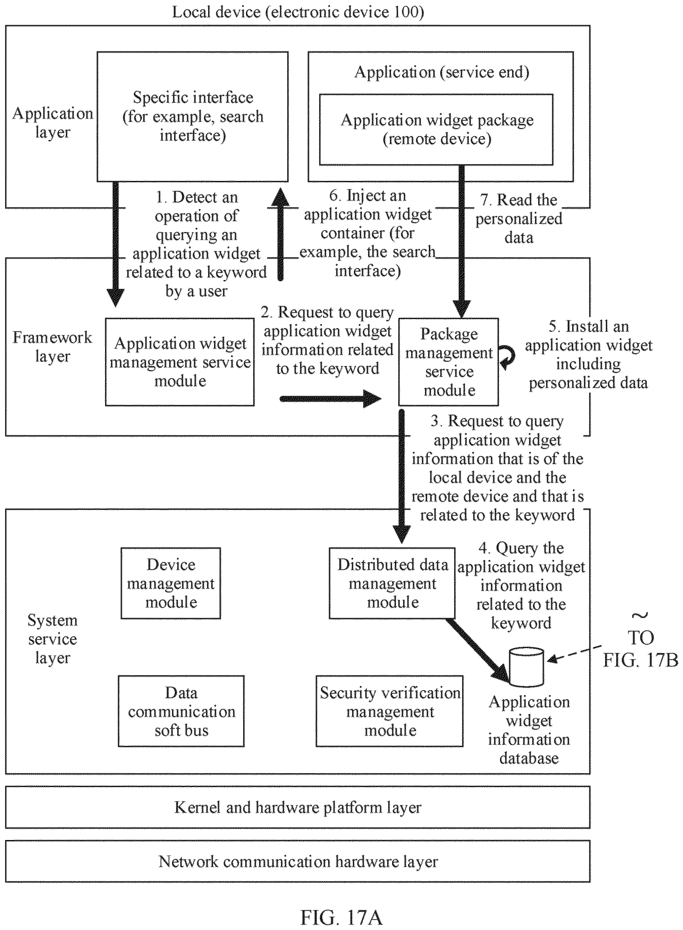

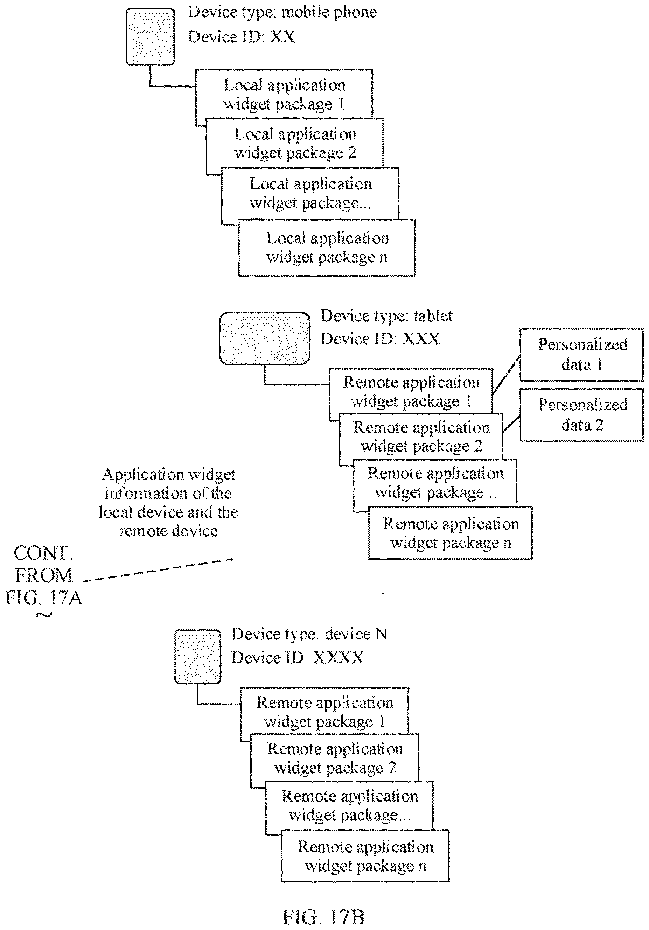

**With reference to** **FIG. 17A** **and** **FIG. 17B****, the following describes an example of a possible coordination manner between modules inside the electronic device 100 when the electronic device 100 dynamically displays an application widget (for example, the application widget shown in** **FIG. 16****) in a specific scenario in which it is detected that information is associated with one or more application widgets.**

Step 1: The electronic device 100 detects, on a specific interface (for example, a search interface), an operation of querying an application widget related to a keyword by a user, and then, an application corresponding to the specific interface may invoke an application widget management service module of the electronic device 100 to query application widget information related to the keyword.

For example, the foregoing operation of querying the application widget related to the keyword by the user may be an operation of inputting the keyword (for example, the word "Fitness") in the search box 1311 shown in FIG. 14A and tapping the search option 1312 by the user.

The specific interface may be provided by a system application (that is, an app that cannot be uninstalled or whose App ID is less than 10000) or may be provided by a third-party application (that is, an application other than a system application). This is not limited in this embodiment of this application.

Step 2: The application widget management service module of the electronic device 100 may access a package management service module, to request the package management service module to query the application widget information related to the keyword.

Step 3: The packet management service module of the electronic device 100 may access a distributed data management module, to request to query application widget information that is of a local device and a remote device and that is related to the keyword.

Step 4: The distributed data management module of the electronic device 100 may query, in the application widget information database, the application widget information that is of the local device and the remote device and that is related to the keyword.

The application widget information of the remote device that is stored in the application widget information database is obtained by the electronic device 100 from the remote device. For a specific obtaining process, refer to related content of the process of obtaining the application widget information in the foregoing solution 2. Details are not described herein again.

It can be learned that, unlike FIG. 15A and FIG. 15B, when the application widget includes dynamic information (that is, personalized data), the application widget information database may further store the dynamic information (for example, personalized data 1 and personalized data 2 in FIG. 17A and FIG. 17B) of the application widget. For description of the personalized data, refer to related content in FIG. 13A and FIG. 13B. Details are not described herein again.

If the distributed data management module can find the application widget information related to the keyword in the application widget information database, the distributed data management module may further return the found application widget information related to the keyword to the package management service module, so as to perform subsequent steps.

Step 5: The package management service module of the electronic device 100 installs the application widget that includes the personalized data.

Specifically, after receiving the application widget information that is related to the keyword and that is returned by the distributed data management module, the package management service module may determine whether an application widget package in the returned application widget information related to the keyword is associated with the personalized data (that is, determine which application widget includes dynamic information). If the application widget package in the returned application widget information related to the keyword is associated with the personalized data, the package management service module needs to install the application widget, that is, the package management service module is responsible for installing the application widget including the personalized data.

An application widget that does not include dynamic information does not need to be installed. Only static information is displayed on the local device.

Step 6: The application widget management service module of the electronic device 100 injects the successfully installed an application widget including the dynamic information into an application widget container (for example, the search interface).

After the package management service module installs the application widget including the dynamic information, the application widget management service module may inject the application widget into the application widget container, so that the application widget can run in the container.

It may be understood that, in the embodiment shown in FIG. 16, the application widget including the dynamic information is injected into the application widget container corresponding to the search interface.

Step 7: The application widget including the personalized data that are of the remote device read the personalized data from the package management service module.

Specifically, after the application widget including the personalized data that are of the remote device are installed and injected into the application widget container, the application widget may start to run, and read personalized data corresponding to the application widget from the package management service module. In this way, states of the application widget displayed on the electronic device 100 may be consistent with states of the application widget displayed on the remote device.

In the foregoing solution 3 and solution 4, the event that triggers the electronic device 100 to obtain the application widget information from the electronic device 200 may further include: the electronic device 100 detects an operation of searching for a keyword on the search interface by the user.

In this embodiment of this application, the first electronic device may be the electronic device 100 (the local device), and the second electronic device may be the electronic device 200 (the remote end device). The first application widget may be an application widget of the electronic device 200. An installation package of the first application widget may also be referred to as a first application widget package. First content may be static information of the first application widget, and first data may be data used to display the static information of the first application widget. Second content may be dynamic information of the first application widget, and the second data may be data (for example, personalized data) used to display the dynamic information of the first application widget. The second application widget may be an application widget of the electronic device 100, and the first request may be a request for obtaining the application widget information in step S407 in FIG. 4B.

The following describes a schematic diagram of a structure of an electronic device 100 according to an embodiment of this application.

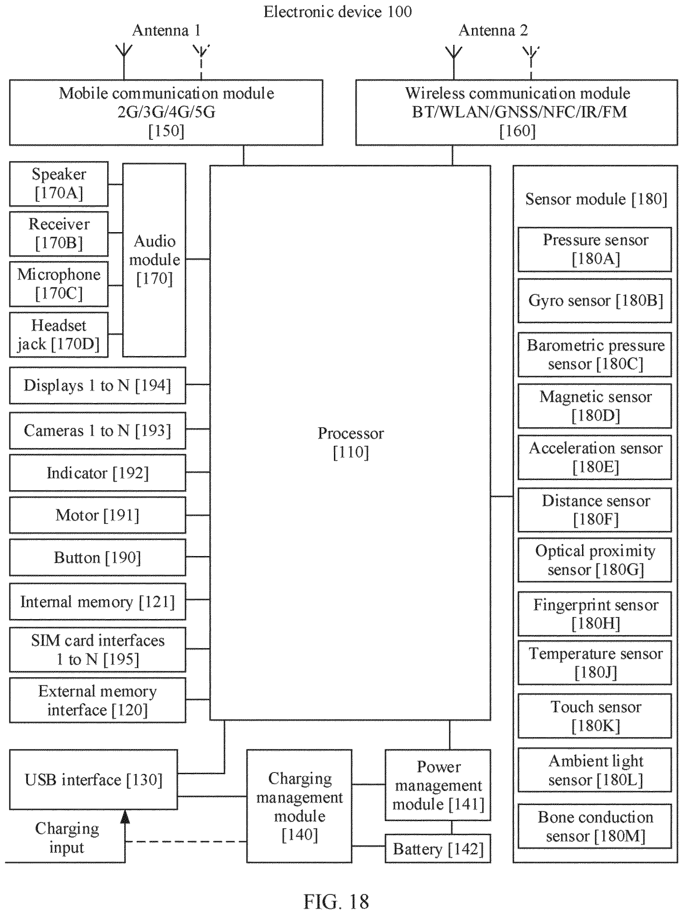

**FIG. 18** **shows an example of a structure of an electronic device 100 according to an embodiment of this application.**

As shown in FIG. 18, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that have/has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component, for example, the display 194 or the camera 193. The MIPI interface includes a camera serial interface (camera serial interface, CSI), a display serial interface (display serial interface, DSI), and the like. In some embodiments, the processor 110 communicates with the camera 193 via the CSI, to implement a photographing function of the electronic device 100. The processor 110 communicates with the display 194 via the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may alternatively be used to connect to another terminal device, for example, an AR device.

It may be understood that an interface connection relationship between the modules illustrated in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device 100 by using the power management module 141.

The power management module 141 is configured to be connected to the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may also be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, an antenna may be used in combination with a tuning switch.

The mobile communication module 150 may provide a wireless communication solution that includes 2G, 3G, 4G, 5G, and the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the camera 193, the ISP, the video codec, the GPU, the display 194, the application processor and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness and the like of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transmission mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (for example, audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing or recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyro sensor 180B may be configured to determine a moving posture of the electronic device 100. In some embodiments, an angular velocity of the electronic device 100 around three axes (namely, axes x, y, and z) may be determined through the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device 100, and is applied to applications such as a pedometer and switching between a landscape mode and a portrait mode.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light emitting diode (LED) and an optical detector, for example, a photodiode. The light emitting diode may be an infrared light emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a leather case mode or a pocket mode to automatically unlock or lock the screen.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a touch panel. The touch sensor 180K may be disposed on the display 194, and the touch sensor 180K and the display 194 constitute a touchscreen, which is also referred to as a "touchscreen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

It should be understood that the electronic device 100 shown in FIG. 18 is merely an example, and the electronic device 100 may have more or fewer components than those shown in FIG. 18, or may combine two or more components, or may have different component configurations. Various components shown in FIG. 18 may be implemented in hardware, software, or in a combination of hardware and software that includes one or more signal processing and/or application-specific integrated circuits.

A structure of the electronic device 200 may be the same as or similar to a structure of the electronic device 100. For related content of the structure of the electronic device 200, refer to related text descriptions of the structure of the electronic device 100 shown in FIG. 18. Details are not described herein again.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the processes of the methods in embodiments may be implemented by a computer program instructing related hardware. The program may be stored in a computer-readable storage medium. When the program runs, the processes of the methods in embodiments are performed. The foregoing storage medium includes any medium that can store program code, for example, a ROM, a random access memory RAM, a magnetic disk, or an optical disc.

The foregoing embodiments are merely intended for describing the technical solutions of this application, but not for limiting this application. Although this application is described in detail with reference to the foregoing embodiments, a person of ordinary skill in the art should understand that modifications to the technical solutions recorded in the foregoing embodiments or equivalent replacements to some technical features thereof may still be made, without departing from the scope of the technical solutions of embodiments of this application.

## Claims

1. An application widget display method, applied to a first electronic device, wherein the method comprises:
receiving, by the first electronic device, application widget information from a second electronic device, wherein the application widget information comprises information about a first application widget, and the first application widget is an application widget of the second electronic device; and
displaying, by the first electronic device, the first application widget based on the information about the first application widget.

2. The method according to claim 1, wherein the information about the first application widget comprises an installation package of the first application widget, and the displaying, by the first electronic device, the first application widget based on the information about the first application widget specifically comprises:
displaying, by the first electronic device, the first application widget based on the installation package of the first application widget, wherein
first content is displayed on the first application widget, the first content is generated by the first electronic device based on first data, and the first data is obtained by the first electronic device from the installation package of the first application widget.

3. The method according to claim 1, wherein the information about the first application widget comprises an installation package of the first application widget and second data, and the displaying, by the first electronic device, the first application widget based on the information about the first application widget specifically comprises:
installing and displaying, by the first electronic device, the first application widget based on the installation package of the first application widget and the second data, wherein
second content is displayed on the first application widget, the second content is generated by the first electronic device based on the second data, and the second data is generated when the second electronic device runs the first application widget.

4. The method according to any one of claims 1 to 3, wherein after the displaying, by the first electronic device, the first application widget based on the information about the first application widget, the method further comprises:
detecting, by the first electronic device, an operation of adding the first application widget to a desktop by a user, and displaying, by the first electronic device, the first application widget on the desktop.

5. The method according to any one of claims 1 to 4, wherein before the displaying, by the first electronic device, the first application widget based on the information about the first application widget, the method further comprises:
detecting, by the first electronic device, an operation of opening an application widget management interface by the user, and displaying, by the first electronic device in response to the operation, the application widget management interface, wherein the application widget management interface comprises an identifier option, and the identifier option comprises an identifier option of the second electronic device; and
detecting, by the first electronic device, an operation of the user on the identifier option of the second electronic device; and
the displaying, by the first electronic device, the first application widget based on the information about the first application widget specifically comprises: displaying, by the first electronic device in response to the operation, the first application widget on the application widget management interface based on the information about the first application widget.

6. The method according to any one of claims 1 to 4, wherein before the displaying, by the first electronic device, the first application widget based on the information about the first application widget, the method further comprises:
detecting, by the first electronic device, an operation of opening an application widget management interface by the user, and displaying, by the first electronic device in response to the operation, the application widget management interface; and
the displaying, by the first electronic device, the first application widget based on the information about the first application widget specifically comprises:
displaying, by the first electronic device, the first application widget on the application widget management interface based on the information about the first application widget, wherein a second application widget is further displayed on the application widget management interface, and the second application widget is an application widget of the first electronic device.

7. The method according to any one of claims 1 to 4, wherein before the displaying, by the first electronic device, the first application widget based on the information about the first application widget, the method further comprises:
detecting, by the first electronic device, an operation of searching for a keyword on a search interface by the user, and obtaining, by the first electronic device in response to the operation, application widget information related to the keyword, wherein the application widget information related to the keyword comprises the information about the first application widget; and
the displaying, by the first electronic device, the first application widget based on the information about the first application widget specifically comprises:
displaying, by the first electronic device, the first application widget on the search interface based on the information about the first application widget.

8. The method according to any one of claims 1 to 7, wherein before the receiving, by the first electronic device, application widget information from a second electronic device, the method further comprises:
detecting, by the first electronic device, that a preset condition is triggered, wherein the preset condition comprises any one of the following: the operation of opening the application widget management interface by the user, the operation of searching for the keyword on the search interface by the user, powering on, restarting, unlocking a screen, or updating a system; and
in response to triggering the preset condition, sending, by the first electronic device, a first request to the second electronic device, wherein the first request indicates the second electronic device to send the application widget information to the first electronic device.

9. The method according to any one of claims 1 to 8, wherein the first electronic device displays an identifier of the second electronic device on the first application widget.

10. The method according to any one of claims 1 to 9, wherein before the receiving, by the first electronic device, application widget information from a second electronic device, the method further comprises:
establishing, by the first electronic device, a communication connection with the second electronic device, and determining that the second electronic device is a trusted device.

11. An application widget display method, applied to a second electronic device, wherein the method comprises:
receiving, by the second electronic device, a first request from a first electronic device, wherein the first request indicates the second electronic device to send application widget information to the first electronic device, the application widget information comprises information about a first application widget, and the first application widget is an application widget of the second electronic device; and
sending, by the second electronic device, the application widget information to the first electronic device.

12. The method according to claim 11, wherein the information about the first application widget comprises an installation package of the first application widget.

13. The method according to claim 12, wherein the information about the first application widget further comprises second data, and before the sending, by the second electronic device, the application widget information to the first electronic device, the method further comprises:
running, by the second electronic device, the first application widget, and generating the second data.

14. The method according to any one of claims 11 to 13, wherein before the receiving, by the second electronic device, a first request from a first electronic device, the method further comprises:
establishing, by the second electronic device, a communication connection with the first electronic device, and determining that the first electronic device is a trusted device.

15. A communication system, wherein the communication system comprises a first electronic device and a second electronic device, wherein
the second electronic device is configured to send application widget information to the first electronic device;
the first electronic device is configured to receive the application widget information, wherein the application widget information comprises information about a first application widget, and the first application widget is an application widget of the second electronic device; and
the first electronic device is further configured to display the first application widget based on the information about the first application widget.

16. An electronic device, wherein the electronic device comprises one or more processors and one or more memories, wherein the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 10 or claims 11 to 14.

17. A computer storage medium, wherein the computer storage medium stores a computer program, the computer program comprises program instructions, and when the program instructions are run on an electronic device, the electronic device is enabled to perform the method according to any one of claims 1 to 10 or claims 11 to 14.
